# EUROPEAN PATENT APPLICATION

(11) **EP 4 192 074 A1**
(43) Date of publication of application: **07.06.2023**
(21) Application number: 21855567.0
(22) Date of filing: 11.08.2021
(51) Int. Cl.: H04W 24/00

(54) **SENSING METHOD AND APPARATUS**

(30) Priority: 12.08.2020 CN 202010809884
(71) Applicant: Huawei Technologies Co., Ltd., Shenzhen, Guangdong 518129 (CN)
(72) Inventor: DU, Rui, Shenzhen, Guangdong 518129 (CN); YIN, Rui, Chengdu, Sichuan 611756 (CN); GUO, Yuchen, Shenzhen, Guangdong 518129 (CN); HAN, Xiao, Shenzhen, Guangdong 518129 (CN); ZHANG, Meihong, Shenzhen, Guangdong 518129 (CN); LIU, Chenchen, Shenzhen, Guangdong 518129 (CN); SUN, Yingxiang, Shenzhen, Guangdong 518129 (CN); YAN, Li, Chengdu, Sichuan 611756 (CN); FANG, Xuming, Chengdu, Sichuan 611756 (CN); TAN, Danny Kai Pin, Shenzhen, Guangdong 518129 (CN)
(74) Representative: Maiwald GmbH
(86) International application number: PCT/CN2021/112051
(87) International publication number: WO 2022/033516

(57) **Abstract**

Embodiments of this application disclose a sensing method and apparatus. The method includes: A terminal device receives first indication information from a network device, where the first indication information includes a sensing parameter. The terminal device periodically sends a sensing data packet to the network device based on the sensing parameter, where the sensing data packet is used to determine a sensing result of a sensing object. In embodiments of this application, the sensing data packet can be periodically sent. This increases a transmit frequency of air interface information, and improves sensing performance.

## Description

This application claims priority to Chinese Patent Application No. 202010809884.0, filed with the China National Intellectual Property Administration on August 12, 2020 and entitled "SENSING METHOD AND APPARATUS", which is incorporated herein by reference in its entirety.

### TECHNICAL FIELD

This application relates to the field of communication technologies, and in particular, to a sensing method and apparatus.

### BACKGROUND

A principle of a wireless local area network (wireless local area network, WLAN) sensing (sensing) technology is as follows: Use a WLAN device to send specific data or a communication channel sounding frame, receive feedback information generated by a peer device in the wireless network, and extract corresponding parameters in the feedback information for analysis, to determine information about an environment around the WLAN device.

The WLAN sensing technology can be applied to fields of industry and civil daily life. For example, in terms of energy management, the WLAN sensing can be used to obtain motion or occupation information in a specific area, and then control a temperature management system, a lighting system, or the like. This can help reduce energy consumption. In terms of home surveillance, the WLAN sensing can be used to monitor the environment in real time, to ensure home security.

However, due to a complex and changeable environment around the WLAN device, or another problem, the WLAN sensing has poor sensing performance.

### SUMMARY

Embodiments of this application provide a sensing method and apparatus. A sensing data packet is periodically sent. This increases a transmit frequency of air interface information, and improves sensing performance.

According to a first aspect, an embodiment of this application provides a sensing method. The method includes: A terminal device receives first indication information from a network device. The first indication information includes a sensing parameter, and indicates the terminal device to periodically send a sensing data packet based on the sensing parameter. The terminal device periodically sends a sensing data packet to the network device based on the sensing parameter. The sensing data packet is used to determine a sensing result of a sensing object. The sensing object is in coverage of the network device.

In this technical solution, the sensing data packet is periodically sent. This increases a transmit frequency of air interface information, and improves sensing performance.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, the sensing parameter indicates that the sensing type is the TXOP type and the number of types of sensing periods is 1. The terminal device may periodically send the sensing data packet to the network device based on the sensing parameter in the following specific implementation: periodically sending the sensing data packet to the network device in one TXOP.

In this technical solution, sending the sensing data packet in the TXOP does not need to contend for a channel again. This can ensure periodicity of sending the sensing data packet in the TXOP and help improve sensing performance.

In an implementation, the sensing parameter indicates that the sensing type is a cross-SP type and the number of types of sensing periods is 1. The terminal device may periodically send the sensing data packet to the network device based on the sensing parameter in the following specific implementation: sending one sensing data packet to the network device at an interval of a first number of SPs, where the first number is one or more.

In this technical solution, sensing measurement is performed in a cross-SP manner. This helps improve sensing effect on a sensing object at a long distance.

In an implementation, the sensing parameter further indicates the duration of the sensing period and the duration of each SP. A product of the first number and the duration of each SP is the duration of the sensing period.

In an implementation, the sensing parameter indicates that the sensing type is a cross-SP type and the number of types of sensing periods is N. The terminal device may periodically send the sensing data packet to the network device based on the sensing parameter in the following specific implementation: For an i^{th} type of sensing period, the terminal device sends a sensing data packet for the i^{th} type of sensing period to the network device at intervals of a same number of SPs, where both N and i are integers, and 1 ≤ i ≤ N.

In this technical solution, when there are at least two types of sensing periods, it is better applied to a sensing measurement scenario in which sensing objects are at different speeds (or different distances).

In an implementation, the sensing parameter indicates that the sensing type is a cross-SP type and there are a plurality of types of sensing periods. Each type of sensing period includes one or more SPs. The terminal device may periodically send the sensing data packet to the network device based on the sensing parameter in the following specific implementation: sending one first sensing data packet or second sensing data packet in each SP. The first sensing data packet carries reuse indication information, where the reuse indication information indicates each sensing period for reuse of the first sensing data packet. The second sensing data packet carries period indication information, where the period indication information indicates a sensing period corresponding to the second sensing data packet.

In this technical solution, the sensing data packet (the first sensing data packet) is reused, to improve utilization of the sensing data packet and reduce overheads of transmitting the sensing data packet. In addition, when there are at least two types of sensing periods, it is better applied to a sensing measurement scenario in which sensing objects are at different speeds (or different distances).

In an implementation, a payload carried in the sensing data packet may be service data or randomly generated data. Alternatively, the sensing data packet carries no payload.

According to a second aspect, an embodiment of this application provides another sensing method. The method includes: A network device sends first indication information to a terminal device. The first indication information includes a sensing parameter, and indicates the terminal device to periodically send a sensing data packet based on the sensing parameter. The network device receives the sensing data packet from the terminal device and determines a sensing result of a sensing object based on the sensing data packet. The sensing object is in coverage of the network device.

In this technical solution, the first indication information is sent to indicate the terminal device to periodically send the sensing data packet. This increases a transmit frequency of air interface information, and improves sensing performance.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, a payload carried in the sensing data packet may be service data or randomly generated data. Alternatively, the sensing data packet carries no payload.

According to a third aspect, an embodiment of this application provides still another sensing method. The method includes:

A network device sends second indication information to a terminal device. The second indication information indicates the terminal device to feed back sensing information based on a sensing data packet. The sensing information is used to determine a sensing result of a sensing object. The sensing object is in coverage of the network device. The network device periodically sends the sensing data packet to the terminal device, and then receives the sensing information from the terminal device.

In this technical solution, the sensing data packet is periodically sent. This increases a transmit frequency of air interface information, and improves sensing performance.

In an implementation, the network device may periodically send the sensing data packet to the terminal device in the following specific implementation: periodically sending the sensing data packet to the terminal device in one TXOP.

In this technical solution, sending the sensing data packet in the TXOP does not need to contend for a channel again. This can ensure periodicity of sending the sensing data packet in the TXOP and help improve sensing performance.

In an implementation, a number of types of sensing periods is 1. The network device may periodically send the sensing data packet to the terminal device in the following specific implementation: sending one sensing data packet to the terminal device at an interval of a second number of SPs.

In this technical solution, sensing measurement is performed in a cross-SP manner. This helps improve sensing effect on a sensing object at a long distance.

In an implementation, a number of types of sensing periods is M. The network device may periodically send the sensing data packet to the terminal device in the following specific implementation: For a j^{th} type of sensing period, the network device sends the sensing data packet for the j^{th} type of sensing period to the terminal device at intervals of a same number of SPs, where both M and j are integers, and 1 ≤ j ≤ M.

In this technical solution, when there are at least two types of sensing periods, it is better applied to a sensing measurement scenario in which sensing objects are at different speeds (or different distances).

In an implementation, there are a plurality of types of sensing periods. Each type of sensing period includes one or more SPs. The network device may periodically send the sensing data packet to the terminal device in the following specific implementation: sending one third sensing data packet or fourth sensing data packet to the terminal device in each SP. The third sensing data packet carries reuse indication information, where the reuse indication information indicates each sensing period for reuse of the third sensing data packet. The fourth sensing data packet carries period indication information, where the period indication information indicates a sensing period corresponding to the fourth sensing data packet.

In this technical solution, the sensing data packet (the third sensing data packet) is reused, to improve utilization of the sensing data packet and reduce overheads of transmitting the sensing data packet. In addition, when there are at least two types of sensing periods, it is better applied to a sensing measurement scenario in which sensing objects are at different speeds (or different distances).

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object. The method may further include: The network device performs data processing on the raw sensing data to obtain the sensing result.

In an implementation, a payload carried in the sensing data packet is service data or randomly generated data. Alternatively, the sensing data packet carries no payload.

According to a fourth aspect, an embodiment of this application provides still another sensing method. The method includes: A terminal device receives second indication information from a network device. The second indication information indicates the terminal device to feed back sensing information based on a sensing data packet. The sensing information is used to determine a sensing result of a sensing object. The sensing object is in coverage of the network device. The terminal device receives the sensing data packet from the network device. The sensing data packet is periodically sent by the network device. The terminal device determines the sensing information based on the sensing data packet and sends the sensing information to the network device.

In this technical solution, sensing is performed based on the sensing data packet that is periodically sent by the network device. This helps improve sensing performance.

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object.

In an implementation, a payload carried in the sensing data packet is service data or randomly generated data. Alternatively, the sensing data packet carries no payload.

According to a fifth aspect, an embodiment of this application provides a communication apparatus. The communication apparatus has some or all functions of the terminal device in the method examples in the first aspect. For example, functions of the communication apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores a computer program and data that are necessary for the communication apparatus.

In an implementation, the communication apparatus includes a processing unit, configured to invoke a communication unit to receive first indication information from a network device. The first indication information includes a sensing parameter, and indicates the communication apparatus to periodically send a sensing data packet based on the sensing parameter. The processing unit is further configured to invoke the communication unit to periodically send the sensing data packet to the network device based on the sensing parameter. The sensing data packet is used to determine a sensing result of a sensing object. The sensing object is in coverage of the network device.

For example, the processing unit may be a processor, the communication unit may be a transceiver or a communication interface, and the storage unit may be a memory.

In an implementation, the communication apparatus includes a processor, configured to invoke a transceiver to receive first indication information from a network device. The first indication information includes a sensing parameter, and indicates the communication apparatus to periodically send a sensing data packet based on the sensing parameter. The processor is further configured to invoke the transceiver to periodically send the sensing data packet to the network device based on the sensing parameter. The sensing data packet is used to determine a sensing result of a sensing object. The sensing object is in coverage of the network device.

According to a sixth aspect, an embodiment of this application provides another communication apparatus. The communication apparatus has some or all functions of the network device in the method examples in the second aspect. For example, functions of the communication apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores a computer program and data that are necessary for the communication apparatus.

In an implementation, the communication apparatus includes a processing unit, configured to invoke a communication unit to send first indication information to a terminal device. The first indication information includes a sensing parameter, and indicates the terminal device to periodically send a sensing data packet based on the sensing parameter. The processing unit is further configured to invoke the communication unit to receive the sensing data packet from the terminal device. The processing unit is further configured to determine a sensing result of a sensing object based on the sensing data packet. The sensing object is in coverage of the communication apparatus.

For example, the processing unit may be a processor, the communication unit may be a transceiver or a communication interface, and the storage unit may be a memory.

In an implementation, the communication apparatus includes a processor, configured to invoke a transceiver to send first indication information to a terminal device. The first indication information includes a sensing parameter, and indicates the terminal device to periodically send a sensing data packet based on the sensing parameter. The processor is further configured to invoke the transceiver to receive the sensing data packet from the terminal device. The processor is further configured to determine a sensing result of a sensing object based on the sensing data packet. The sensing object is in coverage of the communication apparatus.

According to a seventh aspect, an embodiment of this application provides still another communication apparatus. The communication apparatus has some or all functions of the network device in the method examples in the third aspect. For example, functions of the communication apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores a computer program and data that are necessary for the communication apparatus.

In an implementation, the communication apparatus includes a processing unit, configured to invoke a communication unit to send second indication information to a terminal device. The second indication information indicates the terminal device to feed back sensing information based on a sensing data packet. The sensing information is used to determine a sensing result of a sensing object. The sensing object is in coverage of the communication apparatus. The processing unit is further configured to invoke the communication unit to periodically send the sensing data packet to the terminal device. The processing unit is further configured to invoke the communication unit to receive the sensing information from the terminal device.

For example, the processing unit may be a processor, the communication unit may be a transceiver or a communication interface, and the storage unit may be a memory.

In an implementation, the communication apparatus includes a processor, configured to invoke a transceiver to send second indication information to a terminal device. The second indication information indicates the terminal device to feed back sensing information based on a sensing data packet. The sensing information is used to determine a sensing result of a sensing object. The sensing object is in coverage of the communication apparatus. The processor is further configured to invoke the transceiver to periodically send the sensing data packet to the terminal device. The processor is further configured to invoke the transceiver to receive the sensing information from the terminal device.

According to an eighth aspect, an embodiment of this application provides another communication apparatus. The communication apparatus has some or all functions of the terminal device in the method examples in the fourth aspect. For example, functions of the communication apparatus may have some or all functions of embodiments of this application, or may have a function of independently implementing any embodiment in this application. The functions may be implemented by hardware, or may be implemented by hardware by executing corresponding software. The hardware or the software includes one or more units or modules corresponding to the functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores a computer program and data that are necessary for the communication apparatus.

In an implementation, the communication apparatus includes a processing unit, configured to invoke a communication unit to receive second indication information from a network device, where the second indication information indicates the communication apparatus to feed back sensing information based on a sensing data packet, the sensing information is used to determine a sensing result of a sensing object, and the sensing object is in coverage of the network device. The processing unit is further configured to invoke the communication unit to receive the sensing data packet from the network device. The sensing data packet is periodically sent by the network device. The processing unit is further configured to determine the sensing information based on the sensing data packet. The processing unit is further configured to invoke the communication unit to send the sensing information to the network device.

For example, the processing unit may be a processor, the communication unit may be a transceiver or a communication interface, and the storage unit may be a memory.

In an implementation, the communication apparatus includes a processor, configured to invoke a transceiver to receive second indication information from a network device. The second indication information indicates the communication apparatus to feed back sensing information based on a sensing data packet, the sensing information is used to determine a sensing result of a sensing object, and the sensing object is in coverage of the network device. The processor is further configured to invoke the transceiver to receive the sensing data packet from the network device. The sensing data packet is periodically sent by the network device. The processor is further configured to determine the sensing information based on the sensing data packet. The processing unit is further configured to invoke the transceiver to send the sensing information to the network device.

According to a ninth aspect, an embodiment of this application provides a sensing system. The system includes the communication apparatus according to the fifth aspect and the communication apparatus according to the sixth aspect. Alternatively, the system includes the communication apparatus according to the seventh aspect and the communication apparatus according to the eighth aspect.

According to a tenth aspect, an embodiment of the present invention provides a computer-readable storage medium. The computer-readable storage medium stores a computer program, the computer program includes program instructions, and when the program instructions are executed by a communication apparatus, the communication apparatus is enabled to perform the method according to the first aspect.

According to an eleventh aspect, an embodiment of the present invention provides a computer-readable storage medium. The computer-readable storage medium stores a computer program, the computer program includes program instructions, and when the program instructions are executed by a communication apparatus, the communication apparatus is enabled to perform the method according to the second aspect.

According to a twelfth aspect, an embodiment of the present invention provides a computer-readable storage medium. The computer-readable storage medium stores a computer program, the computer program includes program instructions, and when the program instructions are executed by a communication apparatus, the communication apparatus is enabled to perform the method according to the third aspect.

According to a thirteenth aspect, an embodiment of the present invention provides a computer-readable storage medium. The computer-readable storage medium stores a computer program, the computer program includes program instructions, and when the program instructions are executed by a communication apparatus, the communication apparatus is enabled to perform the method according to the fourth aspect.

According to a fourteenth aspect, this application further provides a computer program product including a computer program. When the computer program product runs on a computer, the computer is enabled to perform the method according to the first aspect.

According to a fifteenth aspect, this application further provides a computer program product including a computer program. When the computer program product runs on a computer, the computer is enabled to perform the method according to the second aspect.

According to a sixteenth aspect, this application further provides a computer program product including a computer program. When the computer program product runs on a computer, the computer is enabled to perform the method according to the third aspect.

According to a seventeenth aspect, this application further provides a computer program product including a computer program. When the computer program product runs on a computer, the computer is enabled to perform the method according to the fourth aspect.

According to an eighteenth aspect, this application provides a chip system. The chip system includes a processor and an interface, configured to support a terminal device in implementing a function in the first aspect, for example, determining or processing at least one of data or information in the foregoing method. In a possible design, the chip system further includes a memory, and the memory is configured to store a computer program and data that are necessary for the terminal device. The chip system may include a chip, or may include a chip and another discrete component.

According to a nineteenth aspect, this application provides a chip system. The chip system includes a processor and an interface, configured to support a network device in implementing a function in the second aspect, for example, determining or processing at least one of data and information in the foregoing method. In a possible design, the chip system further includes a memory, and the memory is configured to store a computer program and data that are necessary for the network device. The chip system may include a chip, or may include a chip and another discrete component.

According to a twentieth aspect, this application provides a chip system. The chip system includes a processor and an interface, configured to support a network device in implementing a function in the third aspect, for example, determining or processing at least one of data or information in the foregoing method. In a possible design, the chip system further includes a memory, and the memory is configured to store a computer program and data that are necessary for the network device. The chip system may include a chip, or may include a chip and another discrete component.

According to a twenty-first aspect, this application provides a chip system. The chip system includes a processor and an interface, configured to support a network device in implementing a function in the fourth aspect, for example, determining or processing at least one of data and information in the foregoing method. In a possible design, the chip system further includes a memory, and the memory is configured to store a computer program and data that are necessary for the network device. The chip system may include a chip, or may include a chip and another discrete component.

### BRIEF DESCRIPTION OF DRAWINGS

FIG. 1 is a schematic diagram of an architecture of a communication system according to an embodiment of this application;
FIG. 2a is a schematic flowchart of a sensing method according to an embodiment of this application;
FIG. 2b is a schematic diagram of an existing sensing process according to an embodiment of this application;
FIG. 2c is a schematic diagram of another existing sensing process according to an embodiment of this application;
FIG. 2d is a schematic diagram of a frame structure of a beacon frame according to an embodiment of this application;
FIG. 3a is a schematic flowchart of another sensing method according to an embodiment of this application;
FIG. 3b is a schematic diagram of a structure of a sensing element field when a sensing type is a TXOP type according to an embodiment of this application;
FIG. 3c is a schematic diagram of a structure of a common information field according to an embodiment of this application;
FIG. 3d is a schematic diagram of a scenario in which a terminal device periodically sends a sensing data packet to a network device in one TXOP according to an embodiment of this application;
FIG. 3e is a schematic diagram of a structure of an allocation type field according to an embodiment of this application;
FIG. 4a is a schematic flowchart of still another sensing method according to an embodiment of this application;
FIG. 4b is a schematic diagram of a structure of a sensing details field when a sensing type is a cross-SP type and a number of types of sensing periods is 1 according to an embodiment of this application;
FIG. 4c is a schematic diagram of a scenario in which a terminal device sends one sensing data packet to a network device every one SP according to an embodiment of this application;
FIG. 4d is a schematic diagram of a scenario in which a terminal device 1 and a terminal device 2 send data packets according to an embodiment of this application;
FIG. 5a is a schematic flowchart of still another sensing method according to an embodiment of this application;
FIG. 5b is a schematic diagram of a structure of a sensing details field when a sensing type is a cross-SP type and a number of types of sensing periods is 2 according to an embodiment of this application;
FIG. 5c is a schematic diagram of a scenario in which a terminal device sends a sensing data packet to a network device when there are two types of sensing periods according to an embodiment of this application;
FIG. 6a is a schematic flowchart of still another sensing method according to an embodiment of this application;
FIG. 6b is a schematic diagram of a structure of a sensing ID field in a data frame according to an embodiment of this application;
FIG. 6c is a schematic diagram of a scenario in which a terminal device sends, to a network device, a sensing data packet obtained by reusing the sensing data packet in FIG. 5c;
FIG. 7 is a schematic diagram of an architecture of another communication system according to an embodiment of this application;
FIG. 8a is a schematic flowchart of still another sensing method according to an embodiment of this application;
FIG. 8b is a schematic diagram of a structure of a sensing element field according to an embodiment of this application;
FIG. 8c is a schematic diagram of a structure of a sensing details field when second indication information includes a data type according to an embodiment of this application;
FIG. 8d is a schematic diagram of a scenario in which a network device periodically sends a sensing data packet to a terminal device in one TXOP according to an embodiment of this application;
FIG. 8e is a schematic diagram of a scenario in which a network device sends one sensing data packet to a terminal device every one SP according to an embodiment of this application;
FIG. 8f is a schematic diagram of a scenario in which a network device sends data packets to a terminal device 1 and a terminal device 2 according to an embodiment of this application;
FIG. 8g is a schematic diagram of a scenario in which a network device sends a sensing data packet to a terminal device when there are two types of sensing periods according to an embodiment of this application;
FIG. 8h is a schematic diagram of a scenario in which a network device, sends, to a terminal device, a sensing data packet obtained by reusing the sensing data packet in FIG. 8g;
FIG. 9 is a schematic diagram of a structure of a communication apparatus according to an embodiment of this application;
FIG. 10 is a schematic diagram of a structure of another communication apparatus according to an embodiment of this application; and
FIG. 11 is a schematic diagram of a structure of a chip according to an embodiment of this application.

### DESCRIPTION OF EMBODIMENTS

To better understand a sensing method disclosed in embodiments of this application, the following first describes a communication system to which the embodiments of this application is applicable.

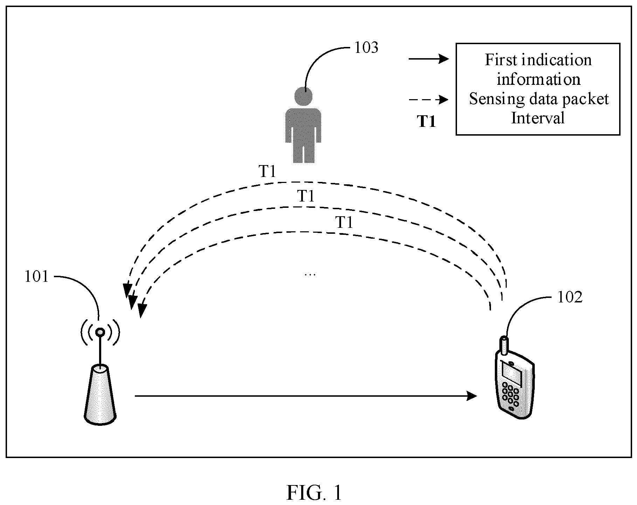

FIG. 1 is a schematic diagram of an architecture of a communication system according to an embodiment of this application. The communication system may include but is not limited to one network device, one terminal device, and one sensing object. A number and forms of devices and a number and a form of objects shown in FIG. 1 do not constitute a limitation on embodiments of this application. In an actual application, the communication system may include two or more network devices, two or more terminal devices, and two or more sensing objects. For example, the communication system shown in FIG. 1 includes one network device 101, one terminal device 102, and one sensing object 103.

The network device 101 may send first indication information to the terminal device 102. The first indication information includes a sensing parameter and indicates the terminal device 102 to periodically send a sensing data packet based on the sensing parameter. After receiving the first indication information, the terminal device 102 may periodically send the sensing data packet to the network device 101 based on the sensing parameter. As shown in FIG. 1, the terminal device 102 sends one sensing data packet to the network device at an interval of duration T1. Correspondingly, the network device 101 may determine a sensing result of the sensing object 103 based on the received sensing data packet. The sensing result may be used to indicate whether the sensing object 103 moves, whether the sensing object 103 is in a moving state, information about an environment around the sensing object 103, or the like. It should be noted that both the sensing object 103 and the terminal device 102 are in coverage of the network device 101 (not shown in FIG. 1). In embodiments of this application, the sensing data packet is periodically sent. This can increase a transmit frequency of air interface information, help obtain more information related to the sensing object, and improve sensing performance.

It should be noted that the technical solutions in embodiments of this application invention may be applied to various communication systems, for example, a long term evolution (long term evolution, LTE) system, a 5th generation (5th generation, 5G) mobile communication system, or a 5G new radio (new radio, NR) system. Optionally, the method in embodiments of this application is further applicable to various future communication systems, for example, a 6G system or another communication network.

The network device 101 in embodiments of this application is a network-side entity that is configured to transmit or receive a signal. For example, the network device may be an evolved NodeB (evolved NodeB, eNB), a transmission reception point (transmission reception point, TRP), a next generation NodeB (next generation NodeB, gNB) in an NR system, a base station in another future mobile communication system, an access point (access point, AP) in a wireless fidelity (wireless fidelity, Wi-Fi) system, or the like. A specific technology and a specific device form that are used by the network device are not limited in embodiments of this application.

The terminal device 102 in embodiments of this application is a user-side entity, for example, a mobile phone, that is configured to receive or transmit a signal. The terminal device may also be referred to as a terminal (terminal), user equipment (user equipment, UE), a mobile station (mobile station, MS), a mobile terminal (mobile terminal, MT), a station (station, STA), or the like. The terminal device may be a mobile phone (mobile phone), a wearable device, a tablet computer (Pad), a computer having a wireless transceiver function, a virtual reality (virtual reality, VR) terminal device, or an augmented reality (augmented reality, AR) terminal device, a wireless terminal in industrial control, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. A specific technology and a specific device form that are used by the terminal device are not limited in embodiments of this application.

It should be noted that, that the sensing object 103 in FIG. 1 is one person is only used as an example, and does not constitute a limitation on embodiments of this application. Alternatively, the sensing object 103 may be an animal, a plant, another object, or the like. A specific device form of the sensing object is not limited in embodiments of this application. It should be further noted that the sensing object may be an active device, or may be a passive device or object. To be specific, in embodiments of this application, sensing measurement may be performed on the active device, or sensing measurement may be performed on the passive device or object.

It can be understood that the communication system described in embodiments of this application is used to describe the technical solution in embodiments of this application more clearly, but does not limit the technical solution provided in embodiments of this application. A person skilled in the art may learn that with evolution of a system architecture and emergence of a new service scenario, the technical solutions provided in embodiments of this application is also applicable to a similar technical problem.

The following describes in detail a sensing method and apparatus provided in this application with reference to the accompanying drawings.

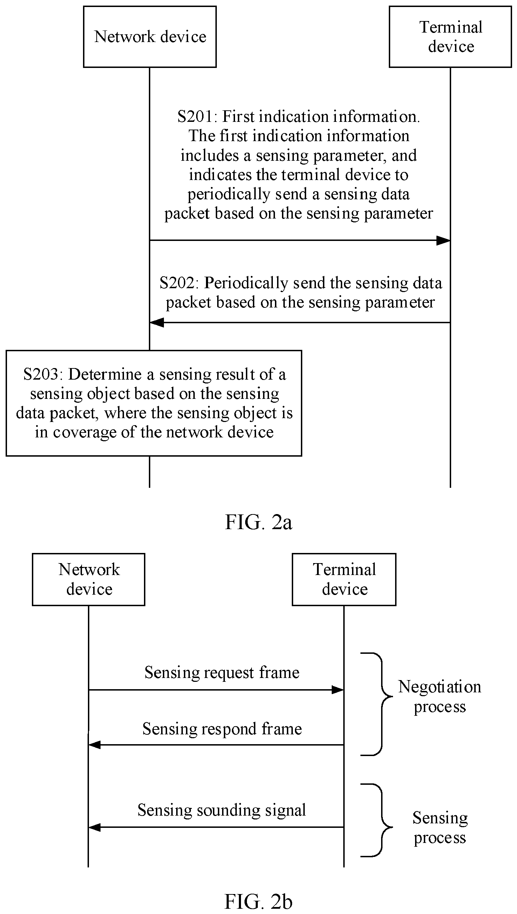

FIG. 2a is a schematic flowchart of a sensing method according to an embodiment of this application. The method describes in detail how a terminal device periodically sends a sensing data packet to a network device based on a sensing parameter when the network device serves as a receive end of the sensing data packet and the terminal device serves as a transmit end of the sensing data packet. Step S201 and step S203 are performed by the network device or a chip in the network device. Step S202 is performed by the terminal device or a chip in the terminal device. The following uses an example in which the sensing method is performed by the network device and the terminal device for description. As shown in FIG. 2a, the method may include but is not limited to the following steps.

Step S201: The network device sends first indication information to the terminal device. The first indication information includes the sensing parameter and indicates the terminal device to periodically send the sensing data packet based on the sensing parameter.

The sensing parameter may indicate a related parameter for the terminal device to periodically send the packet. The network device may send the first indication information to the terminal device once, to indicate the terminal device to periodically send a plurality of sensing data packets. Periodically sending the plurality of (for example, 100) sensing data packets means that one sensing data packet is sent to the network device at intervals of same duration, and a total number of sent sensing data packets is 100 in a sensing process. In such one-time indication manner, each time the sensing data packet is sent, indication may not need to be performed through signaling interaction. This helps reduce signaling overheads.

In an implementation, the sensing parameter may indicate one or more of the following: a sensing type, where the sensing type may be a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period. A transmission opportunity (transmission opportunity, TXOP) means "duration based transmission", to be specific, after channel contention succeeds, a station obtains a time period of using a channel. In this time period, the station may no longer contend for a channel again, and continuously use the channel to transmit a plurality of data frames.

When the sensing type is the TXOP type, the first indication information may indicate the terminal device to periodically send the sensing data packet in one TXOP. When the sensing type is the cross-SP type, the first indication information may indicate the terminal device to send one sensing data packet at intervals of a same number of SPs.

The number of types of sensing periods indicates sensing measurement of a number of periods in the sensing process. In this embodiment of this application, sensing measurement of one or more types of periods may be performed in the sensing process. When there is one type of sensing period, the sensing parameter may further indicate duration of the sensing period. The duration of the sensing period is an interval between two adjacent sensing data packets sent in the sensing measurement process of the type of sensing period. In an implementation, the duration of the sensing period may further be indicated by a pulse repetition interval (pulse repetition interval, PRI). When there are a plurality of types of sensing periods, the sensing parameter may further indicate duration of each type of sensing period. Different sensing periods may have different duration.

Each SP may have the same duration. A unit of the SP duration is the same as that of the sensing period. In an implementation, the duration of the sensing period may be an integer multiple of the SP duration. In other words, one sensing period may include a plurality of SPs. A number of SPs included in the sensing period may be further determined based on the SP duration and the duration of the sensing period. In another implementation, the sensing parameter may directly indicate a number of SPs included in each type of sensing period.

For each type of sensing period, there are a plurality of sensing data packets to be sent at an interval of the duration of the sensing period. For different types of sensing periods, a number of sensing data packets to be sent may be the same or different. For each type of sensing period, lengths of sensing data packets to be sent at an interval of the duration of the sensing period may be the same or may be different. For different types of sensing periods, lengths of sensing data packets to be sent may be the same or different. This is not limited in this embodiment of this application.

It should be noted that, in this embodiment of this application, a receive end of the sensing data packet may perform sensing on the entire sensing data packet. Optionally, in this case, for each type of sensing period, the lengths of sensing data packets to be sent at an interval of the duration of the sensing period may be the same. This can ensure periodicity of sensing measurement. The sensing data packet includes a preamble (preamble) and a payload (payload). In an implementation, the receive end of the sensing data packet may further perform sensing by using the preamble in the sensing data packet. Optionally, in this case, for each type of sensing period, lengths of sensing data packets to be sent at an interval of the duration of the sensing period may be the same or may be different. The preamble has a fixed length. When sensing is performed by using the preamble, a length of the payload does not affect the periodicity of sensing measurement.

In an implementation, the first indication information may be carried in a beacon (Beacon) frame, a trigger (Trigger) frame, a sensing request (Sensing Request) frame, an announce (Announce) frame, a null data physical layer convergence protocol data unit (null data physical layer convergence protocol data unit, NDP) announcement frame, or another downlink frame.

The beacon frame may be used to declare that a network exists. The trigger frame may be used to trigger enabling of a specific process. The announce frame may be used to announce indication information. The announce frame is a frame used to announce indication information in the 802.11ad/ay protocol. The NDP announcement frame is a frame used to announce indication information sent by some NDPs in the 802.11be protocol. The announce frame and the NDP announcement frame have different frame structures.

Currently, in the sensing process, the sensing request frame and a sensing response (Sensing Respond) frame may be used to negotiate sensing operation information. The sensing process can be classified into the following two types:

In one type of the sensing process, the terminal device serves as a transmit end of a sensing sounding signal, and the network device serves as a receive end of the sensing sounding signal. FIG. 2b is a schematic diagram of the sensing process. It can be learned from FIG. 2b that the network device sends the sensing request frame to the terminal device, and the terminal device receives the sensing request frame, sends the sensing respond frame to the network device. In this case, a sensing sounding negotiation process is completed. As shown in FIG. 2b, the sensing request frame may indicate a parameter for the sensing process and indicate the terminal device to serve as the transmit end of the sensing probe signal, and the sensing respond frame may indicate the terminal device to acknowledge that sensing can be performed based on the parameter indicated by the sensing request frame. As shown in FIG. 2b, after sending the sensing respond frame, the terminal device may send the sensing sounding signal to the network device in a specified time period based on a negotiation result. Correspondingly, after receiving the sensing sounding signal, the network device may perform data processing on the sensing sounding information to obtain a sensing result. At this time, the sensing process is completed.

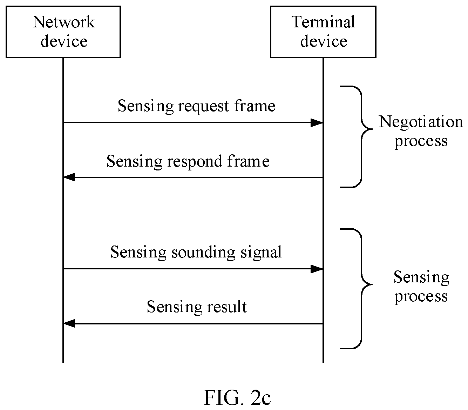

In the other type of the sensing process, the network device serves as a transmit end of a sensing sounding signal, and the terminal device serves as a receive end of the sensing sounding signal. FIG. 2c is a schematic diagram of another sensing process. A sensing process in FIG. 2c is basically the same as the sensing process in FIG. 2b, and details are not described herein again. A difference lies in that the sensing request frame in FIG. 2c may indicate the terminal device to serve as the receive end of the sensing sounding signal. As shown in FIG. 2c, after receiving the sensing respond frame, the terminal device may send the sensing sounding signal to the network device in a specified time period based on a negotiation result. Correspondingly, after receiving the sensing sounding signal, the terminal device may perform data processing on the sensing sounding signal to obtain a sensing result, and feed back the sensing result to the network device. At this time, the sensing process is completed. In this embodiment of this application, a negotiation process of the sensing request frame/sensing respond frame may occur in an announcement transmission interval (announcement transmission interval, ATI).

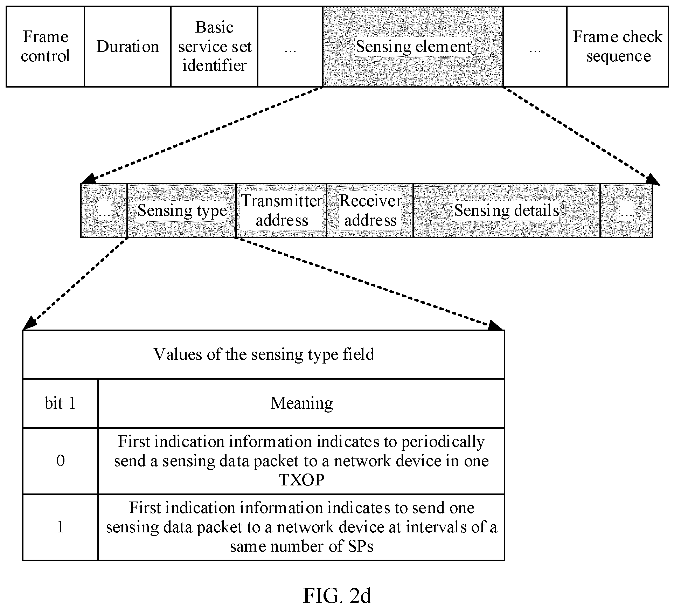

In an implementation, one sensing element field may be added to the beacon frame or the sensing request frame, and the sensing element field indicates the first indication information. A schematic diagram of a frame structure of the beacon frame shown in FIG. 2d is used as an example. The beacon frame in FIG. 2d includes a sensing element (Sensing element) field. The sensing element field may include but is not limited to the following subfields: a sensing type (Type), a transmitter address (transmitter address, TA), a receiver address (receiver address, RA), and a sensing details (Sensing Details).

The sensing type field may occupy one bit. When a value of the sensing type field is 0, it may indicate that the first indication information indicates to periodically send the sensing data packet to the network device in one TXOP. When the value of the sensing type field is 1, it may indicate that the first indication information indicates to send one sensing data packet to the network device at intervals of a same number of SPs. The transmitter address is an address of the transmit end of the sensing data packet, and the receiver address is an address of the receive end of the sensing data packet. It should be noted that, in this embodiment of this application, the transmit end of the sensing data packet may be the network device or the terminal device, and correspondingly the receive end of the sensing data packet may be the terminal device or the network device. The sensing details field can include one or more subfields. When values of the sensing type field are different, the sensing details field may also include different subfields.

It should be noted that the schematic diagram of the frame structure provided in this embodiment of this application is an example, and do not constitute a limitation on this embodiment of this application. An ellipsis in the schematic diagram of the frame structure provided in this embodiment of this application may indicate another field that may be included in addition to the fields in the schematic diagram. It should be further noted that, in FIG. 2d, frame control (Frame control), duration (Duration), basic service set identifier (Basic Service Set Identifier, BSSID), and frame check sequence (Frame Check Sequence, FCS) fields are original fields in the beacon frame, and meanings of the fields are not described herein again. It should be further noted that lengths of the sensing element field, the sensing type field, and the sensing details field are not limited in this embodiment of this application. FIG. 2d show an example in which the sensing type field whose length is one bit. Optionally, the sensing type field may occupy two, three, or another number of bits. It should be further noted that the sensing element field in FIG. 2b is included in the beacon frame, and is only used as an example. The sensing element field in FIG. 2b may be included in the beacon frame or the sensing request frame.

Step S202: The terminal device periodically sends the sensing data packet to the network device based on the sensing parameter.

Specifically, after receiving the first indication information, the terminal device may periodically send the sensing data packet to the network device based on the sensing parameter. For example, when the sensing parameter indicates that the sensing type is the TXOP type, the terminal device may periodically send the sensing data packet to the network device in one TXOP. When the sensing parameter indicates that the sensing type is the cross-SP type, the terminal device may send one sensing data packet to the network device every one SP, or send one sensing data packet to the network device every two SPs.

In this embodiment of this application, the payload carried in the sensing data packet may be service data. To be specific, data carried in the sensing data packet is data originally to be sent. In this manner, sensing measurement can be performed during data transmission. This helps improve utilization of transmitted data. In an implementation, the payload carried in the sensing data packet may be randomly generated data. Alternatively, the sensing data packet may carry no payload, in other words, the sensing data packet is an NDP. In an implementation, in the sensing measurement process, if the transmit end (the terminal device or the network device) of the sensing data packet does not need to transmit data, the transmit end may send, to the receive end, the NDP or the sensing data packet whose payload is the randomly generated data. For example, in the sensing measurement process, if the transmit end of the sensing data packet does not need to transmit data and a length of the sensing data packet needs to be L, the transmit end may randomly generate data and form the payload, so that the length of the sensing data packet that carries the payload is L. If the length of the sensing data packet does not need to be consistent, the transmit end may send the NDP as the sensing data packet.

In an implementation, in the sensing measurement process, if the transmit end of the sensing data packet needs to transmit data, the transmit end may preferably use the data originally to be sent as the payload of the sensing data packet, and preferably send the sensing data packet. After the data that originally to be sent has been sent, if the transmit end further needs to send the sensing data packet, the transmit end may send the NDP or the sensing data packet whose payload is the randomly generated data. In other words, in the sensing measurement process, payloads of a part of sent sensing data packets may be the data originally to be sent, and payloads of the other part of sensing data packets may be the randomly generated data, or the other part of sensing data packets may carry no payload.

In an implementation, in the sensing measurement process, payloads of all sent sensing data packets may be the data originally to be sent, or may be the randomly generated data. Alternatively, in the sensing measurement process, all sent sensing data packets may carry no payload. In an implementation, the cross-SP type may be further classified into a first type, a second type, and a third type. When the sensing type is the first type the first indication information may indicate the terminal device to send one sensing data packet (whose payload is the data originally to be sent) at intervals of a same number of SPs. When the sensing type is the second type, the first indication information may indicate the terminal device to send one sensing data packet (whose payload is the randomly generated data) at intervals of a same number of SPs. When the sensing type is the third type, the first indication information may indicate the terminal device to send one NDP at intervals of a same number of SPs. In this case, the sensing type field needs to occupy at least two bits.

Enhanced distributed channel access (enhanced distributed channel access, EDCA) is a channel contention mechanism, and may provide channel access and transmission services with different priorities to different types of services, so that a high-priority service in a network is transmitted at a media access control (media access control, MAC) layer in which a low-priority service is preferably transmitted. The EDCA may classify data packets into four access categories (access categories, ACs). A high priority AC has more chances to occupy a channel than a low-priority AC. Each AC has a different transmit queue. The four ACs are voice (AC_VO), video (AC_VI), background (AC_BK), and best effort (AC _BE) in descending order of priorities.

In an implementation, the sensing data packet may be placed in a transmit queue of a high-priority AC in the EDCA, so that the sensing data packet can be preferably sent. This can help ensure periodicity of the sensing data packet. In an implementation, if the transmit end of the sensing data packet is insensitive to sensing performance (for example, for the transmit end, other common communication data other than the sensing data packet is more important), the data packet may be placed in a transmit queue of a low-priority AC in the EDCA.

In an implementation, when the sensing type is the cross-SP type, a plurality of terminal devices (for example, a terminal device 1 and a terminal device 2) contend for a channel in a same SP, and the terminal device 1 needs to participate in sensing measurement, and the terminal device 2 does not need to participate in sensing measurement, a to-be-sent sensing data packet of the terminal device 1 may be preferably sent in the SP. This manner can improve sensing performance.

In an implementation, in extremely high throughput (extremely high throughput, EHT), the periodically sent sensing data packet may be carried on a same resource unit (resource unit, RU). Alternatively, in a communication system using orthogonal frequency division multiple access (orthogonal frequency division multiple access, OFDMA), the periodically sent sensing data packet may be carried on a same RU.

Step S203: The network device determines a sensing result of a sensing object based on the sensing data packet, where the sensing object is in coverage of the network device.

Specifically, each time the network device receives one sensing data packet, the network device may determine one piece of raw sensing data for the sensing object. After receiving all the data packets periodically sent by the terminal device, the network device may obtain a plurality of pieces of raw sensing data for the sensing object. Further, the network device may process the raw sensing data to obtain the sensing result of the sensing object. The sensing data packet is periodically sent. This can increase a transmit frequency of air interface information, help obtain more information related to the sensing object, and improve sensing performance.

In an implementation, after receiving the sensing data packet, the network device may further update channel state information (channel state information, CSI) based on the sensing data packet. The terminal device periodically sends the sensing data packet to the network device, and the network device may periodically update the CSI, to implement periodic channel sounding. In an implementation, the network device may perform sensing measurement based on the updated CSI, to obtain the sensing result of the sensing object. In an implementation, the network device may adjust a communication parameter based on the updated CSI. For example, when CSI quality deteriorates, a lower modulation and coding scheme (modulation and coding scheme, MCS) may be used instead. This helps reduce a bit error rate.

In this embodiment of this application, the sensing data packet is periodically sent. This can increase a transmit frequency of air interface information, help obtain more information related to the sensing object, and improve sensing performance.

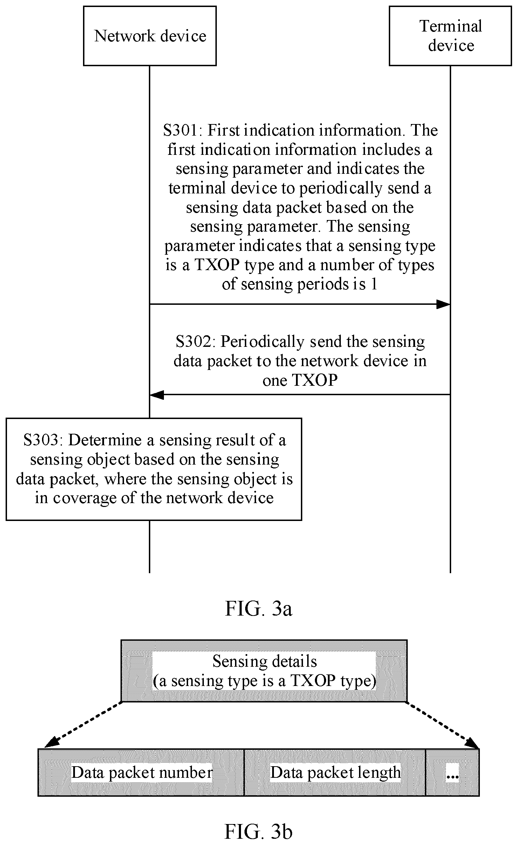

FIG. 3a is a schematic flowchart of another sensing method according to an embodiment of this application. The method describes in detail how a terminal device periodically sends a sensing data packet to a network device when a sensing type is a TXOP type. Step S301 and step S303 are performed by the network device or a chip in the network device. Step S302 is performed by the terminal device or a chip in the terminal device. The following uses an example in which the sensing method is performed by the network device and the terminal device for description. As shown in FIG. 3a, the method may include but is not limited to the following steps.

Step S301: The network device sends first indication information to the terminal device. The first indication information includes a sensing parameter and indicates the terminal device to periodically send the sensing data packet based on the sensing parameter. The sensing parameter indicates that the sensing type is the TXOP type and a number of types of sensing periods is 1.

When the sensing type is the TXOP type, the first indication information may indicate the terminal device to periodically send the sensing data packet in one TXOP. When the sensing type is the TXOP type, a schematic diagram of a structure of a sensing details field may be shown in FIG. 3b.

Refer to FIG. 3b. The sensing details field may include but is not limited to a data packet number field and/or a data packet length field. The data packet number field indicates a number of sensing data packets periodically sent in one TXOP. The data packet length field indicates a length of each sensing data packet periodically sent in one TXOP.

In an implementation, the sensing details field may further include a field (not shown in FIG. 3b) indicating a number of types of sensing periods. In an implementation, when the sensing details field does not include the field indicating the number of types of sensing periods, it may indicate that there is only one type of sensing period. It should be noted that, for the rest of an execution process of step S301, refer to the specific descriptions of step S201 in FIG. 2a. Details are not described herein again.

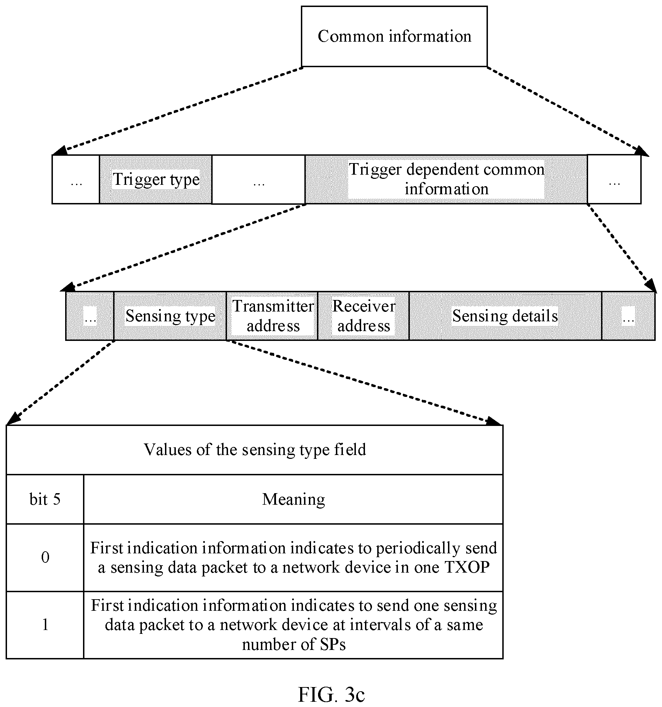

The sensing element field in a beacon frame or a sensing request frame indicates the first indication information. In another implementation, the first indication information may be further carried in a trigger frame. Specifically, the first indication information may be indicated by a common information (Common Info) field in the trigger frame. FIG. 3c is a schematic diagram of a structure of the common information field. As shown in FIG. 3c, the common information field includes but is not limited to a trigger type (Trigger Type) field and a trigger dependent common information (Trigger Dependent Common Info) field. Currently, the trigger type field occupies four bits, and values 8 to 15 of the trigger type field are reserved. In this embodiment of this application, one value (for example, 8) may be selected from the reserved values. When a value of the trigger type field is this value, it may indicate that the trigger frame including the common information is used to trigger sensing measurement. When values of the trigger type field are different, the trigger dependent common information field may also include different subfields. When the value of the trigger type field is 8, subfields included in the trigger dependent common information field may be the same as the subfields included in the sensing element field in FIG. 2d. For information about the sensing element field, refer to related descriptions in the embodiment in FIG. 2a. Details are not described herein again.

Step S302: The terminal device periodically sends the sensing data packet to the network device in one TXOP.

Specifically, after receiving the first indication information, the terminal device may periodically send the sensing data packet to the network device in one TXOP. In this embodiment of this application, sending the sensing data packet in the TXOP specifically means sending the sensing data packet at a time domain position in which the TXOP is located.

In an implementation, the sensing parameter may further indicate the number of sensing data packets periodically sent in one TXOP, in other words, the sensing details field includes the data packet number field. The sensing parameter may further indicate the length of each sensing data packet periodically sent in one TXOP, in other words, the sensing details field includes the data packet length field. In an implementation, when the sensing parameter does not indicate the number of sensing data packets periodically sent in one TXOP, the terminal device may determine, by itself, the number of sensing data packets periodically sent in the TXOP. When the sensing parameter does not indicate the length of the sensing data packet periodically sent in one TXOP, the terminal device may determine, by itself, the length of the sensing data packet periodically sent in the TXOP.

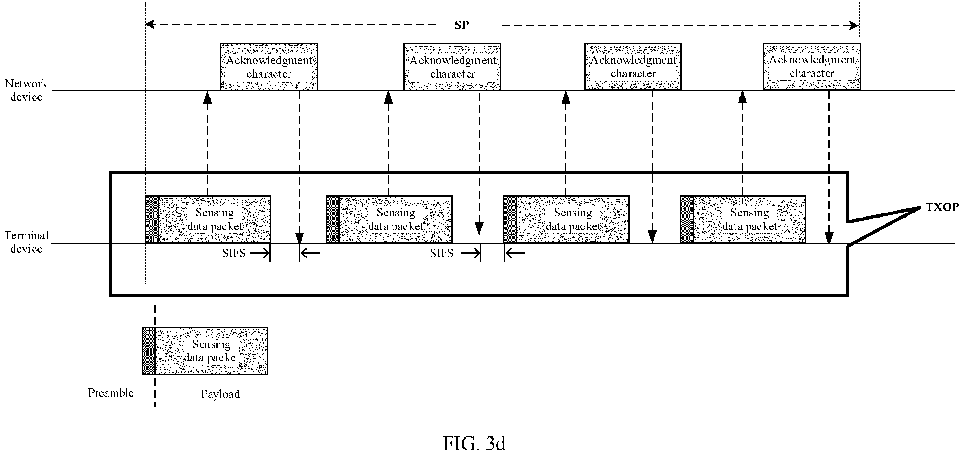

FIG. 3d is a schematic diagram of a scenario in which the terminal device periodically sends the sensing data packet to the network device in one TXOP. It can be learned from FIG. 3d that after obtaining a TXOP in one SP through contention, the terminal device periodically sends four sensing data packets in the TXOP. Sending the sensing data packet in the TXOP does not need to contend for a channel again. This can ensure periodicity of sending the sensing data packet in the TXOP and help improve sensing performance.

As shown in FIG. 3d, after receiving the sensing data packet, the network device may feed back an acknowledgment character (acknowledge character, ACK) to the terminal device. After receiving an acknowledgment character for a sensing data packet sent last time, the terminal device may send a next sensing data packet. In this embodiment of this application, an interval between sending time points of two adjacently sent data packets (such as the sensing data packet and the acknowledgment character) sent between the terminal device and the network device is greater than or equal to a short interframe space (short interframe space, SIFS). It should be noted that, in FIG. 3d, the sensing data packet includes two parts, where a dark gray part indicates a preamble in the sensing data packet, and a light gray part indicates a payload in the sensing data packet.

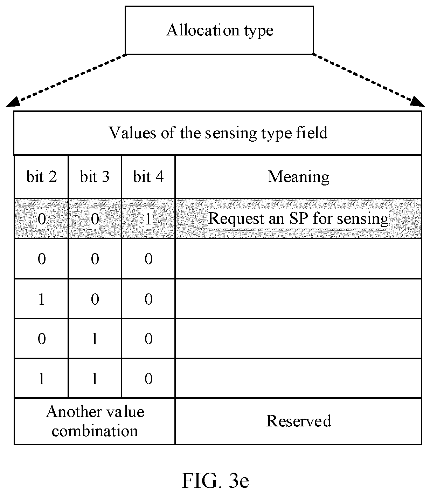

It should be further noted that the SP in FIG. 3d is an SP for sensing, and the SP may be applied by the terminal device to the network device. Specifically, the terminal device sends a service period request (service period request, SPR) frame to the network device. The SPR frame includes an allocation type (Allocation type) field, and the allocation type field occupies three bits. In this embodiment of this application, a new combination is defined for values of bits in the allocation type field, to request the SP for sensing. A schematic diagram of a structure of the allocation type field may be shown in FIG. 3e. In FIG. 3e, a new value combination 001 of three bits in the allocation type field is defined in this embodiment of this application. In this case, the SPR frame in which the allocation type field is located may be used to request the SP for sensing. It should be noted that, in FIG. 3e, when the value combination of the three bits in the allocation type field is 000, 100, 010, or 110, a corresponding meaning is the same as a meaning in a conventional technology. Details are not described herein again. When the value combination of the three bits in the allocation type field is another value combination (another value combination other than the foregoing value combination), the value combination is reserved. A corresponding meaning may be assigned to the another value combination when required subsequently.

Step S303: The network device determines a sensing result of a sensing object based on the sensing data packet, where the sensing object is in coverage of the network device.

It should be noted that, for an execution process of step S303, refer to the specific descriptions of step S203 in FIG. 2a. Details are not described herein again.

In this embodiment of this application, sending the sensing data packet in the TXOP does not need to contend for a channel again. This can ensure periodicity of sending the sensing data packet in the TXOP and help improve sensing performance.

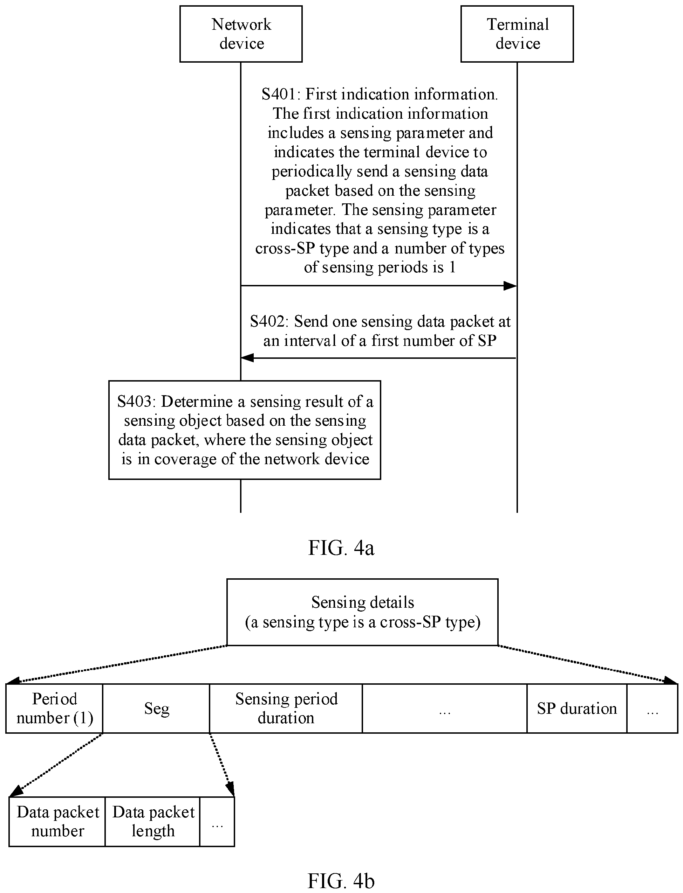

FIG. 4a is a schematic flowchart of still another sensing method according to an embodiment of this application. The method describes in detail how a terminal device periodically sends a sensing data packet to a network device when a sensing type is a cross-SP type. Step S401 and step S403 are performed by the network device or a chip in the network device. Step S402 is performed by the terminal device or a chip in the terminal device. The following uses an example in which the sensing method is performed by the terminal device and the network device for description. The method may include but is not limited to the following steps.

Step S401: The network device sends first indication information to the terminal device. The first indication information includes a sensing parameter and indicates the terminal device to periodically send the sensing data packet based on the sensing parameter. The sensing parameter indicates that the sensing type is the cross-SP type and a number of types of sensing periods is 1.

When the sensing type is the cross-SP type, the first indication information may indicate the terminal device to send one sensing data packet at intervals of a same number of SPs. When the sensing type is the cross-SP type, a sensing details field may include but is not limited to the following one or more subfields: a sensing number (Number) field, a data packet corresponding to each sensing period (Segment, Seg for short) field, a duration of each type of sensing period (sensing period duration) field, and an SP duration field. The data packet field corresponding to each sensing period includes a data packet number field and a data packet length field.

A period number field indicates the number of types of sensing periods. The SP duration field indicates duration of each SP. In this embodiment of this application, the duration of each SP may be the same or may be different. If N types of sensing periods are required, the sensing details field may include N Seg fields and N sensing period duration fields. The Seg field and the sensing period duration field are in a one-to-one correspondence with one type of sensing period. N is an integer greater than or equal to 1.

For example, the sensing type is the cross-SP type and the number of types of sensing periods is 1. A schematic diagram of a structure of the sensing details field may be shown in FIG. 4b. FIG. 4b includes one Seg field, one sensing period duration field, a period number field, and an SP duration field. The data packet number field in the Seg field indicates a number of sensing data packets to be sent at an interval of duration of the sensing period. The data packet length field in the Seg field indicates a length of the sensing data packet to be sent at an interval of duration of the sensing period.

It should be noted that when the sensing type is the cross-SP type and the number of types of sensing periods is 1, if the sensing details field does not indicate the duration of the sensing period (or the number of sensing data packets and the length of sensing data packet), a transmit end of the sensing data packet may determine, by itself, the duration of the sensing period. When the sensing details field does not include the field indicating the number of types of sensing periods, it may indicate that there is only one type of sensing period. It should be further noted that, for the rest of an execution process of step S401, refer to the specific descriptions of step S201 in FIG. 2a. Details are not described herein again.

Step S402: The terminal device sends one sensing data packet to the network device at an interval of a first number of SPs.

Specifically, after receiving the first indication information, the terminal device may send one sensing data packet to the network device at the interval of the first number of SPs. The first number is one or more. The first number may be determined by the transmit end of the sensing data packet (for example, the first number is randomly determined), or may be jointly indicated by the sensing period duration field and the SP duration field. A product of the first number and a value of the SP duration field is the duration of the sensing period. The value of the SP duration field indicates the duration of each SP. In this embodiment of this application, the duration of the sensing period may be an integer multiple of the SP duration.

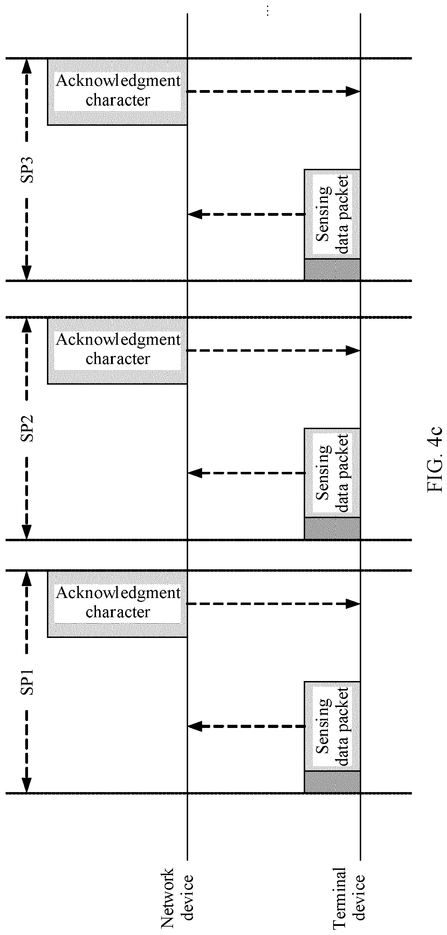

FIG. 4c is a schematic diagram of a scenario in which the terminal device sends one sensing data packet to the network device every one SP. It can be learned from FIG. 4c that the terminal device sends one sensing data packet at a start time point of each SP (an SP1, an SP2, and an SP3 in the figure), to periodically send the sensing data packet. It should be noted that, FIG. 4c shows an example in which a sensing measurement process including three SPs. A number of SPs included in the sensing measurement process is not limited in this embodiment of this application. In FIG. 4c, the SP1, the SP2, and the SP3 have same duration.

In an implementation, the terminal device may apply to the network device for a plurality of SPs for sensing measurement. Because a length of one SP is greater than a maximum length of the TXOP, sensing measurement in a cross-SP manner helps improve sensing effect on a sensing object at a long distance, and further helps improve sensing effect on a sensing object that moves at a lower speed. Similarly, sensing measurement in a TXOP manner helps improve sensing effect on a sensing object at a short distance, and further helps improve sensing effect on a sensing object that moves at a higher speed. In other words, it can be applied to a sensing measurement scenario in which sensing objects are at different speeds or different distances.

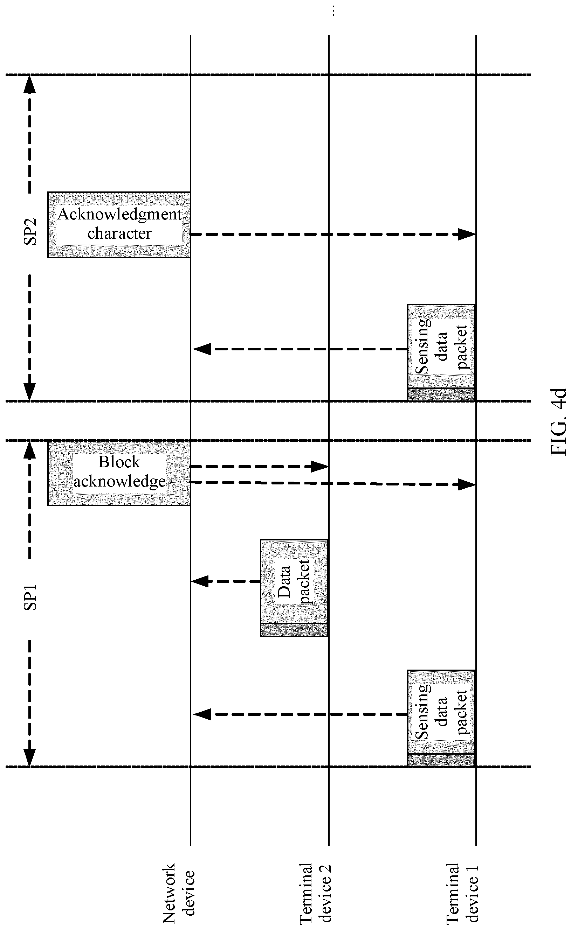

In an implementation, a plurality of terminal devices (for example, a terminal device 1 and a terminal device 2) contend for a channel in a same SP, and the terminal device 1 needs to participate in sensing measurement, and the terminal device 2 does not need to participate in sensing measurement, a schematic diagram of a scenario in which the terminal device 1 and the terminal device 2 send data packets is shown in FIG. 4d. It can be learned from FIG. 4d that, compared with a common data packet, the sensing data packet may be preferably sent in the SP. In other words, data of the terminal device 1 that needs to participate in sensing measurement may be preferably sent. This manner can improve sensing performance. It should be noted that, in the SP1 in FIG. 4d, after receiving the data packets sent by the terminal device 1 and the terminal device 2, the network device may sequentially send block acknowledgments (block ACKs, BAs) to the terminal device 1 and the terminal device 2, to indicate that data is successfully received. When a same terminal device sends a plurality of data packets to the network device in one SP, the network device feeds back one block acknowledgment to the terminal device once, to indicate that the network device receives all the data packets sent by the terminal device. When a same terminal device sends one data packet to the network device in one SP, the network device may feed back a block acknowledgment or an acknowledgment character to the terminal device.

It should be noted that, in this embodiment of this application, when the sensing data packet needs to be sent in a specific SP, the sensing data packet only needs to be sent in duration of the SP. FIG. 4c and FIG. 4d show examples in which the terminal device sends the sensing data packet at a start time point of the SP. This does not constitute a limitation on this embodiment of this application. It should be further noted that when sensing data packets are sent in different SPs, intervals between sending time points of the sensing data packets in the different SPs and start time points of the SPs in which the sensing data packets are located may be the same or may be different. This is not limited in this embodiment of this application. For example, in FIG. 4c, an interval between a sending time point of a sensing data packet in the SP1 and a start time point of the SP1 may be different from an interval between a sending time point of a sensing data packet in the SP2 and a start time point of the SP2.

Step S403: The network device determines a sensing result of a sensing object based on the sensing data packet, where the sensing object is in coverage of the network device.

It should be noted that, for an execution process of step S403, refer to the specific descriptions of step S203 in FIG. 2a. Details are not described herein again.

In this embodiment of this application, sensing measurement is performed in a cross-SP manner. This helps improve sensing effect on a sensing object at a long distance.

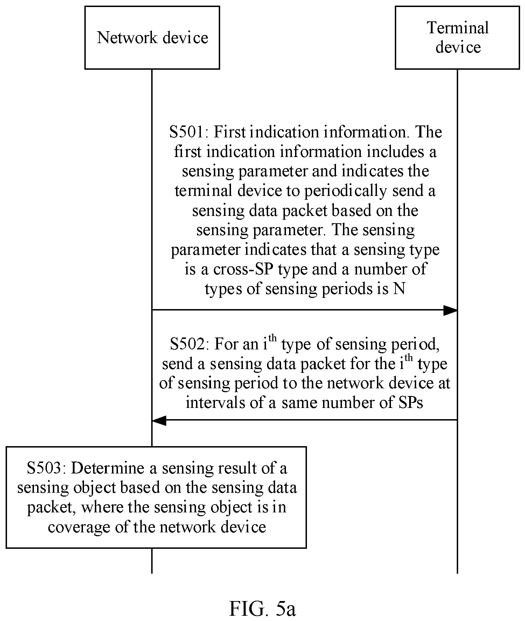

FIG. 5a is a schematic flowchart of still another sensing method according to an embodiment of this application. The method describes in detail how a terminal device periodically sends a sensing data packet to a network device when a sensing type is a cross-SP type and there are a plurality of types of sensing periods. Step S501 and step S503 are performed by the network device or a chip in the network device. Step S502 is performed by the terminal device or a chip in the terminal device. The following uses an example in which the sensing method is performed by the terminal device and the network device for description. The method may include but is not limited to the following steps.

Step S501: The network device sends first indication information to the terminal device. The first indication information includes a sensing parameter and indicates the terminal device to periodically send the sensing data packet based on the sensing parameter. The sensing parameter indicates that the sensing type is the cross-SP type and a number of types of sensing periods is N.

In this embodiment of this application, when the number of types of the sensing periods is N, the sensing details field may include N Seg fields and N sensing period duration fields. The Seg field and the sensing period duration field are in a one-to-one correspondence with one type of sensing period.

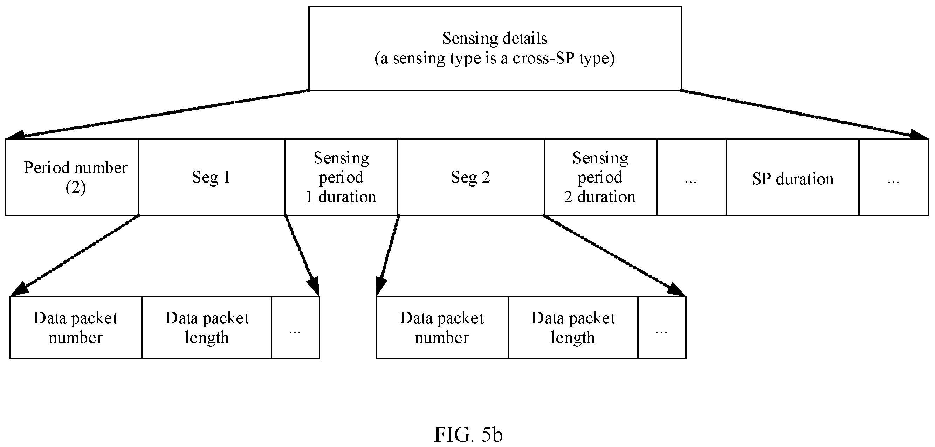

For example, the sensing type is the cross-SP type and the number of types of sensing periods is 2. A schematic diagram of a structure of the sensing details field may be shown in FIG. 5b. In FIG. 5b, a sensing period 1 duration field may indicate duration of a first type of sensing period, and a sensing period 2 duration field may indicate duration of a second type of sensing period. A data packet number field in a Seg 1 field indicates a number of sensing data packets to be sent at an interval of duration of the first type of sensing period. A data packet length field in the Seg 1 field indicates a length of the sensing data packet to be sent at an interval of duration of the first type of sensing period. Similarly, a data packet number field in a Seg 2 field indicates a number of sensing data packets to be sent at an interval of duration of the second type of sensing period. A data packet length field in the Seg 2 field indicates a length of the sensing data packet to be sent at an interval of duration of the second type of sensing period. It should be noted that, for the rest of an execution process of step S501, refer to the specific descriptions of step S201 in FIG. 2a. Details are not described herein again.

Step S502: For an i^{th} type of sensing period, sending, by the terminal device, the sensing data packet for the i^{th} type of sensing period to the network device at intervals of a same number of SPs.

N and i are both integers, and 1 ≤ I ≤ N. In this embodiment of this application, different sensing periods may have different duration. In other words, for different types of sensing periods, the terminal device may send a sensing data packet for a corresponding sensing period to the network device at intervals of different number of SPs. For the i^{th} type of sensing period, a number of SPs between two adjacent sensing data packets sent by the terminal device to the network device is duration of the i^{th} sensing period/SP duration.

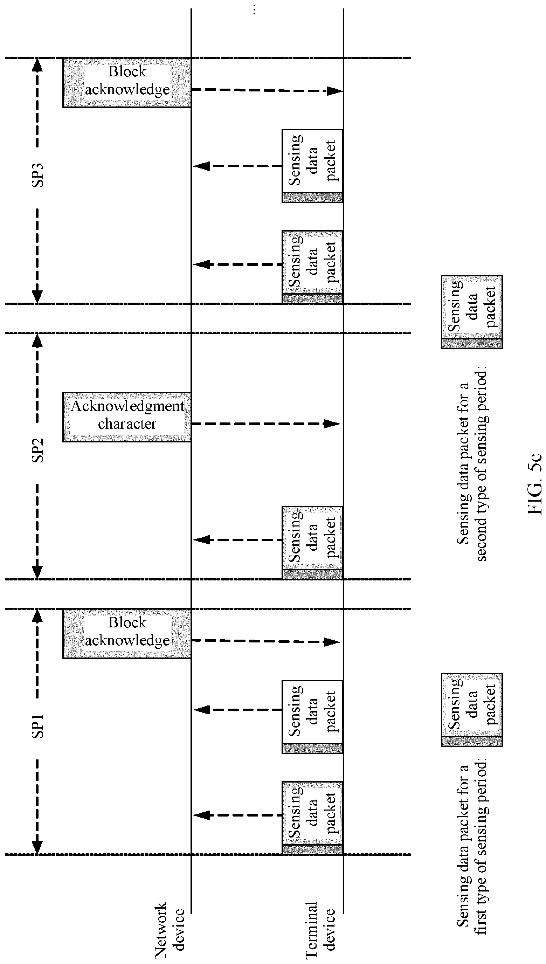

For example, the sensing type is the cross-SP type and there are two types of sensing periods (duration of the first type of sensing period is one SP duration, and duration of the second type of sensing period is two SP duration). FIG. 5c shows a schematic diagram of a scenario in which the terminal device sends the sensing data packet to the network device. As shown in FIG. 5c, the terminal device sends one sensing data packet for the first type of sensing period at a start time point of each SP (an SP1, an SP2, and an SP3 in the figure), and sends one sensing data packet for the second type of sensing period every two SPs. There are two types of sensing periods, therefore, it is better applied to a sensing measurement scenario in which sensing objects are at different speeds (or different distances). In the sensing measurement scenario in which the sensing objects are at different speeds (or different distances), this also helps improve sensing effect.

In an implementation, one period field may be added to the sensing data packet to indicate a sensing period corresponding to the sensing data packet. For example, a period field in the sensing data packet for the i^{th} type of sensing period may indicate the i^{th} type of sensing period.

Step S503: The network device determines a sensing result of a sensing object based on the sensing data packet, where the sensing object is in coverage of the network device.

In an implementation, when there are a plurality of types of sensing periods, there may be a plurality of sensing objects. In an implementation, the number of types of sensing periods may be greater than the number of sensing objects. Sensing data packets in different sensing periods may be used to perform sensing on a same sensing object.

In an implementation, the number of types of sensing periods may be the same as the number of sensing objects. A sensing data packet for one type of sensing period may be used to perform sensing on one sensing object, and sensing data packets for different sensing periods may be used to perform sensing on different sensing objects. In an implementation, when the number of types of sensing periods may be the same as the number of sensing objects, after receiving the data packet for the i^{th} type of sensing period, the network device may determine a sensing result of an i^{th} sensing object based on the data packet for the i^{th} type of sensing period. In other words, after receiving the sensing data packets carrying the period field, the network device may separately process, based on content indicated by the period field, sensing data packets for different sensing periods indicated by the period field. For example, when there are two types of sensing periods, the network device may separately process the sensing data packet for the first type of sensing period and the sensing data packet for the second type of sensing period. Separate processing can prevent a sensing data packet used to perform sensing on a specific sensing object from affecting a sensing result of another sensing object. This can improve reliability of the sensing result.

It should be noted that, for the rest of an execution process of step S503, refer to the specific descriptions of step S203 in FIG. 2a. Details are not described herein again.

In this embodiment of this application, when there are two types of sensing periods, it is better applied to a sensing measurement scenario in which sensing objects are at different speeds (or different distances). In the sensing measurement scenario in which the sensing objects are at different speeds (or different distances), this also helps improve sensing effect. In addition, a receive end of the sensing data packet separately processes, based on the content indicated by the period field, the sensing data packets for different sensing periods indicated by the period field. This can prevent a sensing data packet used to perform sensing on a specific sensing object from affecting a sensing result of another sensing object. This can improve reliability of the sensing result.

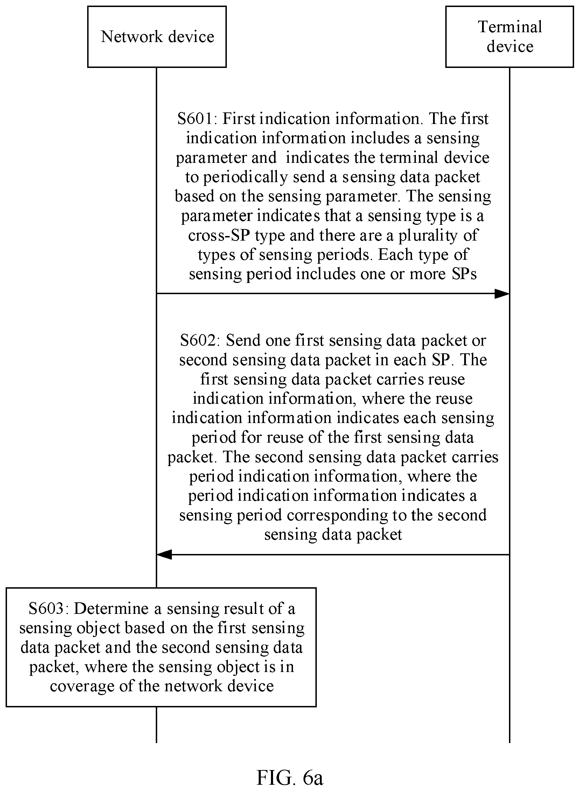

FIG. 6a is a schematic flowchart of still another sensing method according to an embodiment of this application. The method describes in detail how a terminal device reuses a sensing data packet when a sensing type is a cross-SP type and there are a plurality of types of sensing periods. Step S601 and step S603 are performed by the network device or a chip in the network device. Step S602 is performed by the terminal device or a chip in the terminal device. The following uses an example in which the sensing method is performed by the terminal device and the network device for description. The method may include but is not limited to the following steps.

Step S601: The network device sends first indication information to the terminal device. The first indication information includes a sensing parameter and indicates the terminal device to periodically send the sensing data packet based on the sensing parameter. The sensing parameter indicates that the sensing type is a cross-SP type and there are a plurality of types of sensing periods. Each type of sensing period includes one or more SPs.

It should be noted that, for an execution process of step S601, refer to the specific descriptions of step S501 in FIG. 5a. Details are not described herein again.

Step S602: The terminal device sends one first sensing data packet or second sensing data packet in each SP. The first sensing data packet carries reuse indication information, where the reuse indication information indicates each sensing period for reuse of the first sensing data packet. The second sensing data packet carries period indication information, where the period indication information indicates a sensing period corresponding to the second sensing data packet.

In this embodiment of this application, when there are a plurality of sensing periods, sensing data packets for two types of sensing periods need to be sent in some SPs. For example, refer to FIG. 5c. Both the sensing data packet for the first type of sensing period and the sensing data packet for the second type of sensing period need to be sent in an SP1 and an SP3. In this case, the sensing data packet may be reused in the SP1 and the SP3, to send one sensing data packet in both the SP 1 and the SP3. The sensing data packet corresponds to both the first type of sensing period and the second type of sensing period. In this manner, utilization of the sensing data packet is improved and overheads of transmitting the sensing data packet are reduced.

The first sensing data packet carries reuse indication information, to indicate that the first sensing data packet is reused by a plurality of sensing periods. The second sensing data packet carries period indication information, to indicate that the second sensing data packet is not reused by the plurality of sensing periods, and the second sensing data packet corresponds to only one sensing period.

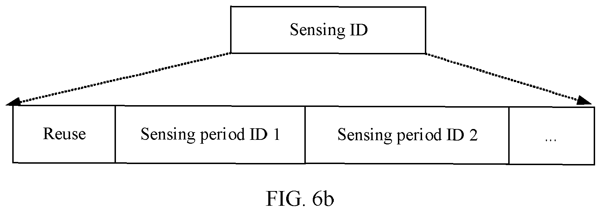

In this embodiment of this application, a sensing identifier (sensing ID) field may be added to a conventional data frame. The sensing ID field may indicate the following information: a sensing period corresponding to the sensing data packet, whether the sensing data packet is reused, and a specific sensing period in which the sensing data packet is reused. In an implementation, the sensing ID field may include a reuse (Reuse) field and m sensing period identifier (sensing period ID) fields. FIG. 6b is a schematic diagram of a structure of the sensing ID field in the data frame. A value of the reuse field indicates a number of sensing periods in which the sensing data packet is reused. When the sensing data packet is not reused, the value of the reuse field in the sensing data packet may be set to 1. The number of sensing periods in which the sensing data packet is reused is the same as a number of (namely, m) sensing period ID fields included in the sensing ID field. Each sensing period ID field in the sensing ID field indicates one sensing period in which the sensing data packet is reused, m is an integer greater than or equal to 1. It should be noted that the sensing ID field shown in FIG. 6b includes at least two sensing period ID fields, which is only used as an example. When the value of the reuse field is 1, the sensing ID field may include only one sensing period ID field. In this case, the sensing ID field indicates a sensing period corresponding to the sensing data packet.

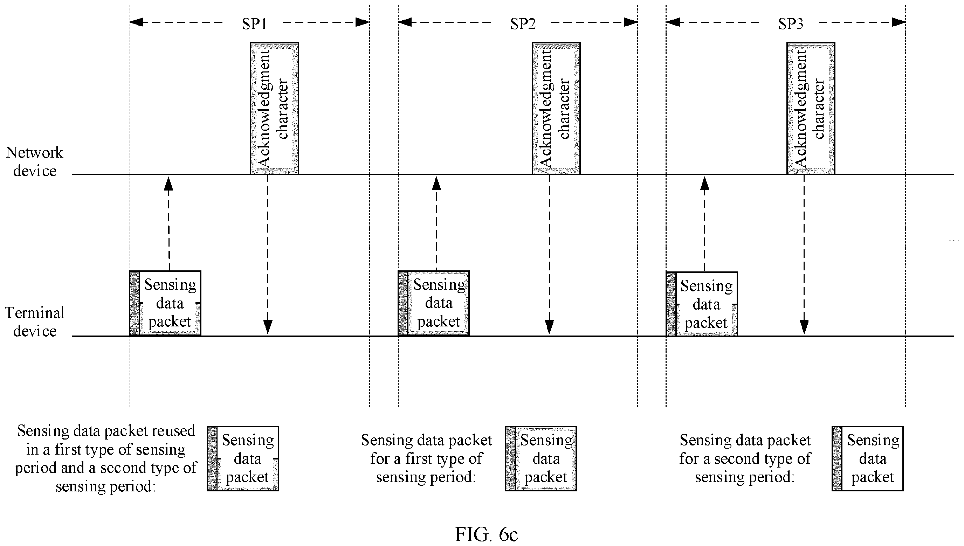

FIG. 6c is a schematic diagram of a scenario in which the terminal device sends, to the network device, a sensing data packet obtained by reusing the sensing data packet. In FIG. 6c, the sensing data packet reused in the first type of sensing period and the second type of sensing period is the first sensing data packet, and the sensing data packet for the first type of sensing period and the sensing data packet for the second type of sensing period are second sensing data packets. It can be learned from FIG. 6c that, by reusing the sensing data packet, the sensing data packet sent in the SP1 and the SP3 may correspond to both the first type of sensing period and the second type of sensing period. In this manner, utilization of the sensing data packet is improved and overheads of transmitting the sensing data packet are reduced. In addition, when there are two types of sensing periods, it is better applied to a sensing measurement scenario in which sensing objects are at different speeds (or different distances). In the sensing measurement scenario in which the sensing objects are at different speeds (or different distances), this also helps improve sensing effect.

Step S603: The network device determines a sensing result of a sensing object based on the first sensing data packet and the second sensing data packet, where the sensing object is in coverage of the network device.

Specifically, after receiving the first sensing data packet and the second sensing data packet, the network device may extract the sensing ID field, determine a sensing period in which the first sensing data packet is reused, and determine a sensing period corresponding to the second sensing data packet. Further, sensing data packets corresponding to different sensing periods are separately processed. Separate processing can prevent a sensing data packet used to perform sensing on a specific sensing object from affecting a sensing result of another sensing object. This can improve reliability of the sensing result. It should be noted that, for the rest of an execution process of step S603, refer to the specific descriptions of step S503 in FIG. 5a. Details are not described herein again.

According to this embodiment of this application, utilization of the sensing data packet is improved and overheads of transmitting the sensing data packet are reduced. In addition, when there are two types of sensing periods, it is better applied to a sensing measurement scenario in which sensing objects are at different speeds (or different distances). In the sensing measurement scenario in which the sensing objects are at different speeds (or different distances), this also helps improve sensing effect.

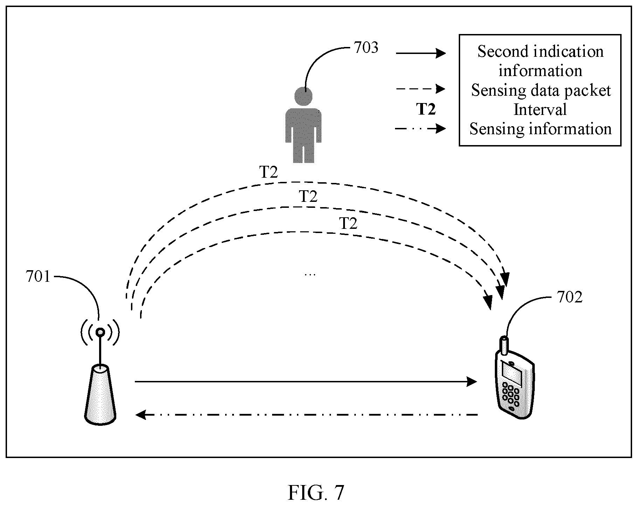

FIG. 7 is a schematic diagram of an architecture of another communication system according to an embodiment of this application. The communication system may include but is not limited to one network device, one terminal device, and one sensing object. A number and forms of devices and a number and a form of objects shown in FIG. 7 do not constitute a limitation on this embodiment of this application. In an actual application, the communication system may include two or more network devices, two or more terminal devices, and two or more sensing objects. For example, the communication system shown in FIG. 7 includes one network device 701, one terminal device 702, and one sensing object 703.

The network device 701 may send second indication information to the terminal device 702. The second indication information indicates the terminal device 702 to feed back sensing information based on a sensing data packet. The network device 701 may be further configured to periodically send the sensing data packet to the terminal device 702. As shown in FIG. 7, the network device 701 sends one sensing data packet to the network device at an interval of duration T2. After receiving the sensing data packet, the terminal device 702 may determine sensing information of a sensing object based on the received sensing data packet, and send the sensing information to the network device 701.

The sensing information may be used to determine a sensing result of the sensing object. Both the sensing object 703 and the terminal device 702 are in coverage of the network device 701 (not shown in FIG. 7). In this embodiment of this application, the sensing data packet is periodically sent. This can increase a transmit frequency of air interface information, help obtain more sensing information related to the sensing object, and improve sensing performance.

It should be noted that specific technologies and specific device forms used by the network device 701, the terminal device 702, and the sensing object 703 may be respectively the same as specific technologies and specific device forms used by the network device 101, the terminal device 102, and the sensing object 103 in FIG. 1. Details are not described herein again.

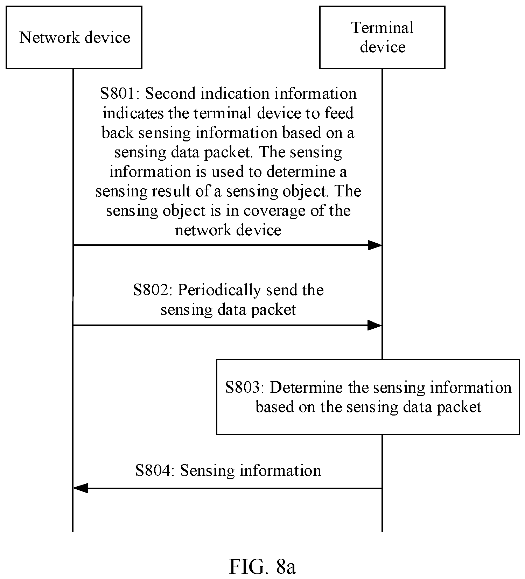

FIG. 8a is a schematic flowchart of still another sensing method according to an embodiment of this application. The method describes in detail how a network device periodically sends a sensing data packet to a terminal device when the network device serves as a transmit end of the sensing data packet and the terminal device serves as a receive end of the sensing data packet. Step S801 and step S802 are performed by the network device or a chip in the network device. Step S803 and step S804 are performed by the terminal device or a chip in the terminal device. The following uses an example in which the sensing method is performed by the network device and the terminal device for description. As shown in FIG. 8a, the method may include but is not limited to the following steps.

Step S801: The network device sends second indication information to the terminal device. The second indication information indicates the terminal device to feed back sensing information based on a sensing data packet. The sensing information is used to determine a sensing result of a sensing object. The sensing object is in coverage of the network device.

The second indication information indicates the terminal device to determine, based on the sensing data packet, the sensing information related to the sensing object, and feed back the sensing information. In addition, the second indication information also indicates that the network device serves as the transmit end of the sensing data packet, and the terminal device serves as the receive end of the sensing data packet. The network device may send the second indication information to the terminal device once, to indicate the terminal device to feed back sensing information based on a sensing data packet subsequently periodically sent by the network device. In such one-time indication manner, signaling interaction may not need to be performed once for each sensing data packet, to indicate the terminal device to feed back the sensing information based on the sensing data packet. This helps reduce signaling overheads.

In an implementation, the second indication information may be carried in a beacon (Beacon) frame, a trigger (Trigger) frame, a sensing request (Sensing Request) frame, an announce (Announce) frame, a null data physical layer convergence protocol data unit (null data physical layer convergence protocol data unit, NDP) announcement frame, or another downlink frame.

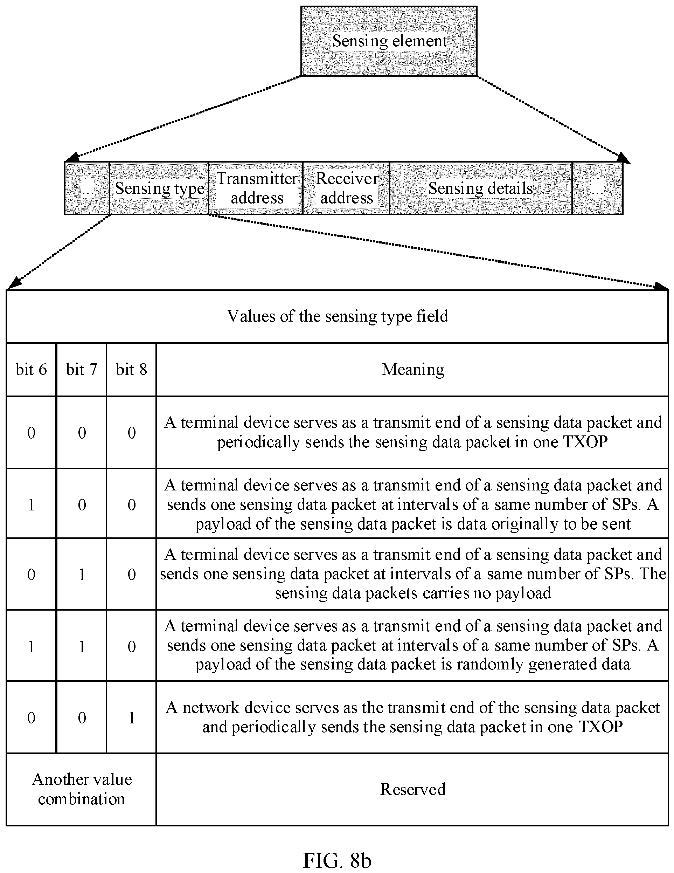

In an implementation, the sensing element field added to the beacon frame or the sensing request frame may indicate the second indication information. The sensing type field in the sensing element field may further indicate the terminal device to act as the receive end of the sensing data packet and feed back the sensing information based on the sensing data packet. FIG. 8b is a schematic diagram of a structure of a sensing element field according to an embodiment of this application. In FIG. 8b, the sensing type field occupies three bits, and different value combinations of the three bits may indicate different information. For example, when a value combination of the three bits is 001, it indicates that the terminal device serves as the receive end of the sensing data packet, and the network device periodically sends the sensing data packet in one TXOP. When the value combinations of the three bits are different, the sensing details field may include different subfields. It should be noted that bit 6, bit 7, and bit 8 in FIG. 8b identify different bits.

In an implementation, the second indication information may include a data type, and the sensing information may match the data type. In other words, when the second indication information includes the data type, the second indication information may specifically indicate the terminal device to feed back, based on the sensing data packet, the sensing information that matches the data type.

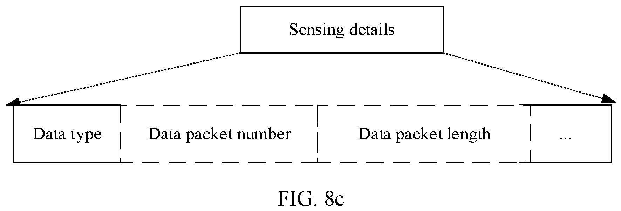

FIG. 8c is a schematic diagram of a structure of a sensing details field when the second indication information includes the data type. In FIG. 8c, the sensing details field may include a data type field, and optionally may further include a data packet number field and a data packet length field. A dashed box in FIG. 8c indicates that the sensing details field may or may not include the data packet number field and the data packet length field. The data type field may indicate the data type, and specifically, may indicate whether sensing information subsequently fed back to the network device is unprocessed raw sensing data or a processed sensing result.

In an implementation, the second indication information may further indicate a number of sensing data packets (indicated by the data packet number field) and/or a length of the sensing data packet (indicated by the data packet length field). The number of sensing data packets is a total number of sensing data packets that are to be sent by the network device to the terminal device in a sensing measurement process. Lengths of sensing data packets sent by the network device to the terminal device in the sensing measurement process may be the same or may be different. The number of sensing data packets or the length of the sensing data packet or both are indicated to the terminal device, so that the terminal device can determine whether all sensing data packets that the network device expects to send in the sensing measurement process have been received. if the second indication information does not indicate the number of sensing data packets and/or the length of the sensing data packet, the terminal device may demodulate the sensing data packet to determine the length of the sensing data packet and the number of sensing data packets.

The sensing element field in a beacon frame or a sensing request frame indicates the first indication information. In another implementation, the second indication information may be further carried in a trigger frame. Specifically, the second indication information may be indicated by a common information (Common Info) field in the trigger frame. Refer to the schematic diagram of the structure of the common Info field shown in FIG. 3c. In another implementation, when a value of a trigger type field is 0, a trigger dependent common information field may indicate that the terminal device serves as the transmit end of the sensing data packet and periodically sends the sensing data packet in one TXOP. When the value of the trigger type field is 1, the trigger dependent common information field may indicate that the terminal device serves as the receive end of the sensing data packet, and the network device periodically sends the sensing data packet in one TXOP. When the value of the trigger type field is 1, the trigger dependent common information field may have a same structure as that of the sensing details field shown in FIG. 8c.

In still another implementation, in addition to the beacon frame, sensing request frame, and trigger frame, the second indication information may be further carried in an announce frame and an NDP announcement frame.

Specifically, the second indication information may be indicated by a category (Category) field and an action details information (Action Details) field in the Announce frame. Currently, the category field in the announce frame occupies eight bits, and values 30 to 125 of the category field are reserved. In this embodiment of this application, one value (for example, 30) may be selected from the reserved values. When a value of the category field is the value, it may indicate that an Announce frame in which the Category field is located is used to trigger sensing measurement performed by the terminal device as the receive end of the sensing data packet. When values of the category field are different, the action details field may also include different subfields. When the value of the category field is 30, the action details field may have a same structure as that of the sensing details field shown in FIG. 8c.

Specifically, the second indication information may be indicated by a station information (STA Info) field in the NDP announcement frame. The STA Info field includes an AID 11 field. Currently, the STA Info field occupies 32 bits, and the AID 11 field occupies 11 bits. In this embodiment of this application, the AID11 field may be set to a value (referred to as a special ID) that is never used in normal communication, to indicate that the NDP announcement frame is used to trigger sensing measurement performed by the terminal device as the receive end of the sensing data packet. When the AID 11 field is the special ID, the sensing details field shown in FIG. 8c may be added to remaining 21 bits in the STA Info field. If there is a remaining bit, the remaining bit may be reserved as a reserved bit.

Step S802: The network device periodically sends the sensing data packet to the terminal device.

Specifically, the network device may periodically send the sensing data packet to the terminal device in one TXOP. In this embodiment of this application, the sensing data packet is periodically sent. This can increase a transmit frequency of air interface information, help obtain more sensing information related to the sensing object, and improve sensing performance.

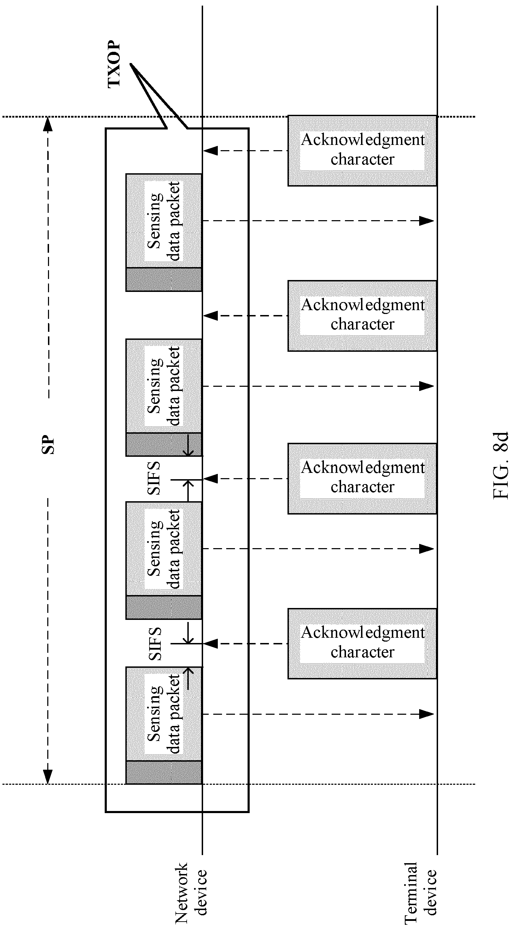

FIG. 8d is a schematic diagram of a scenario in which the network device periodically sends the sensing data packet to the terminal device in one TXOP. It should be noted that an execution process in which the network device periodically sends the sensing data packet to the terminal device in one TXOP in FIG. 8d is similar to an execution process in which the terminal device periodically sends the sensing data packet to the network device in one TXOP in FIG. 3d. Differences lie in a transmission direction of the sensing data packet, and in FIG. 8d, the network device contends for the TXOP in one SP, and periodically sends four sensing data packets in FIG. 8d in the TXOP after obtaining the TXOP through contention. For the execution process thereof, refer to specific descriptions of step S302 in FIG. 3a. Details are not described herein again. It should be further noted that FIG. 3d and FIG. 8d show examples in which the four sensing data packets are sent in one TXOP. Another number of sensing data packets may be alternatively sent in the TXOP. A number of sensing data packets sent in one TXOP is not limited in this application. Sending the sensing data packet in the TXOP does not need to contend for a channel again. This can ensure periodicity of sending the sensing data packet in the TXOP and help improve sensing performance.

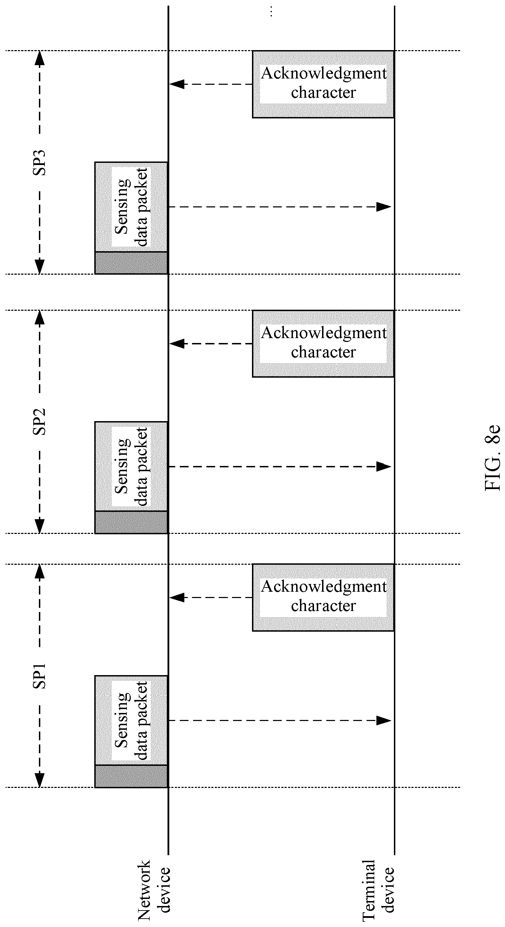

In an implementation, the network device may further periodically send the sensing data packet to the terminal device in a cross-SP manner. Specifically, when a number of types of sensing periods is 1, the network device may send one sensing data packet to the terminal device at an interval of a second number of SPs. The second number is one or more. The second number may be determined by the transmit end of the sensing data packet. FIG. 8e is a schematic diagram of a scenario in which the network device sends one sensing data packet to the terminal device every one SP. It should be noted that an execution process in which the network device sends one sensing data packet to the terminal device every one SP in FIG. 8e is similar to an execution process in which the terminal device sends one sensing data packet to the network device every one SP in FIG. 4c. A difference lies in a transmission direction of the sensing data packet. For the execution process thereof, refer to specific descriptions of step S402 in FIG. 4a. Details are not described herein again. In an implementation, the network device may notify the terminal device of the second number, so that the terminal device receives the sensing data packets.

It should be noted that, in this embodiment of this application, when the terminal device serves as the transmit end of the sensing data packet, an SP for transmitting the sensing data packet may be applied by the terminal device to the network device. When the network device serves as the transmit end of the sensing data packet, an SP for transmitting the sensing data packet is determined by the network device itself, and does not need to be applied by the terminal device.

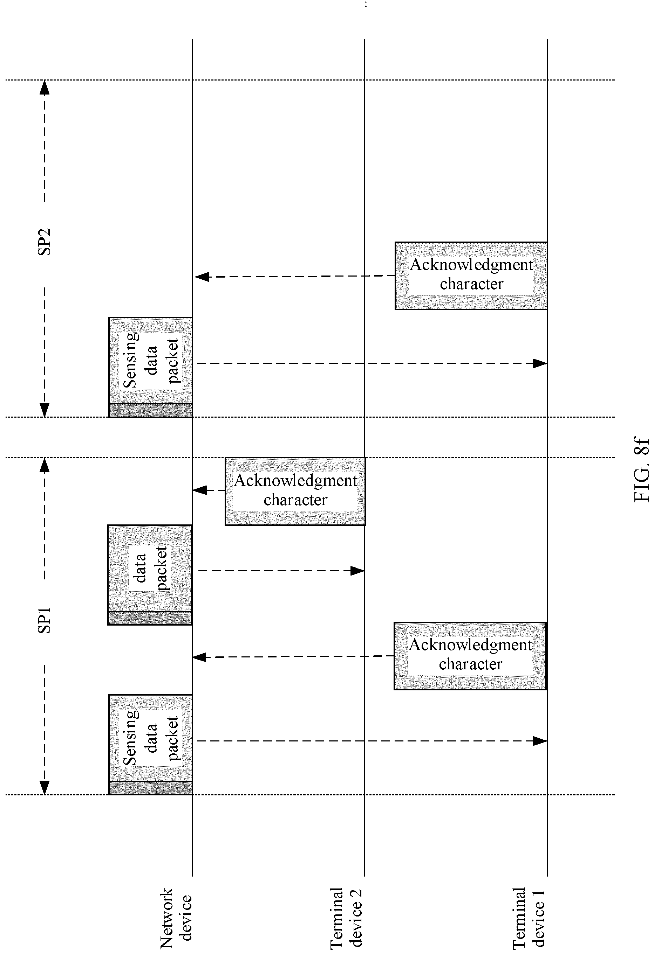

In an implementation, the network device may send a data packet to one or more terminal devices (for example, a terminal device 1 and a terminal device 2) in a same SP. FIG. 8f shows a schematic diagram of a scenario in which the network device sends the data packet to the terminal device 1 and the terminal device 2 when the terminal device 1 needs to participate in sensing measurement, and the terminal device 2 does not need to participate in sensing measurement. It can be learned from FIG. 8f that, compared with a common data packet, the network device may preferably send the sensing data packet to the terminal device 1 that needs to participate in sensing measurement in the SP. This manner can improve sensing performance. It should be noted that an execution process in which the network device sends the data packets to the terminal device 1 and the terminal device 2 in FIG. 8f is similar to an execution process in which the terminal device 1 and the terminal device 2 send the data packets to the network device in FIG. 4d. A difference lies in a transmission direction of the data packet. For the execution process thereof, refer to specific descriptions of step S402 in FIG. 4a. Details are not described herein again.

In an implementation, when the number of types of sensing periods is M, the network device may periodically send the sensing data packet to the terminal device in the cross-SP manner in the following specific implementation: For a j^{th} type of sensing period, the network device sends the sensing data packet for the j^{th} type of sensing period to the terminal device at intervals of a same number of SPs. M and j are both integers, and 1 ≤ j ≤ M. In this embodiment of this application, different sensing periods may have different duration. To be specific, for different types of sensing periods, the network device may send a sensing data packet for a corresponding sensing period to the terminal device at intervals of different number of SPs. For the j^{th} type of sensing period, a number of SPs between two adjacent sensing data packets sent by the network device to the terminal device is duration of the j^{th} sensing period/SP duration.

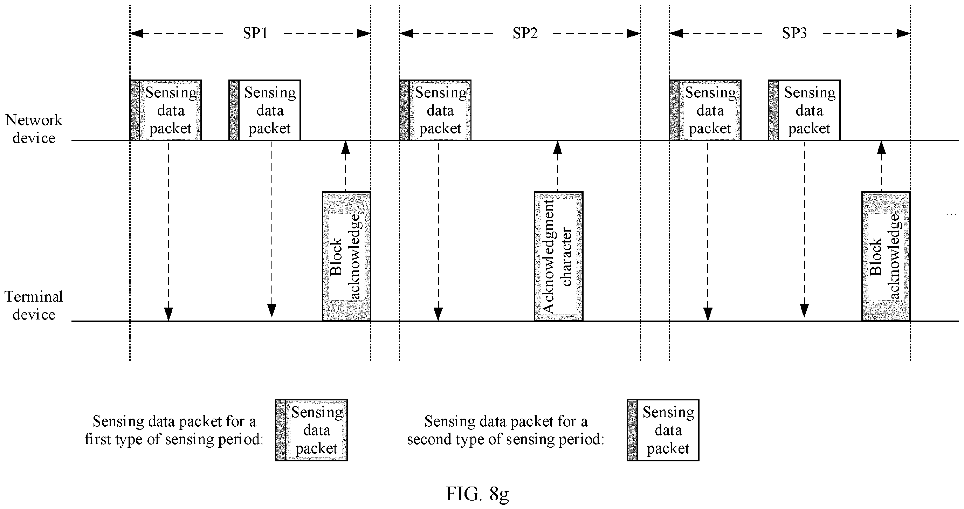

For example, there are two types of sensing periods (duration of the first type of sensing period is one SP duration, and duration of the second type of sensing period is two SP duration). FIG. 8g shows a schematic diagram of a scenario in which the network device sends the sensing data packet to the terminal device. As shown in FIG. 8g, the network device sends one sensing data packet for the first type of sensing period at a start time point of each SP (an SP1, an SP2, and an SP3 in the figure), and sends one sensing data packet for the second type of sensing period every two SPs. There are two types of sensing periods, therefore, it is better applied to a sensing measurement scenario in which sensing objects are at different speeds (or different distances). In the sensing measurement scenario in which the sensing objects are at different speeds (or different distances), this also helps improve sensing effect. In an implementation, one period field may be added to the sensing data packet to indicate a sensing period corresponding to the sensing data packet. For example, a period field in the sensing data packet for the j^{th} type of sensing period may indicate the j^{th} type of sensing period.

In an implementation, the network device may notify the terminal device of an interval of a specific number of SPs at which the network device sends the sensing data packet for the j^{th} type of sensing period to the terminal device for the j^{th} type of sensing period. Alternatively, the network device may notify the terminal device of duration of the j^{th} type of sensing period and SP duration, so that the terminal device can learn of the interval of the specific number of SPs at which the network device sends the sensing data packet for the j^{th} type of sensing period to the terminal device for the j^{th} type of sensing period. In this manner, the terminal device can receive the sensing data packet.

In this embodiment of this application, when there are a plurality of sensing periods, sensing data packets for two types of sensing periods need to be sent in some SPs. In this case, the sensing data packet may be reused, so that utilization of the sensing data packet is improved and overheads of transmitting the sensing data packet are reduced. Specifically, when there are a plurality of types of sensing periods, and each type of sensing period includes one or more SPs, the network device may periodically send the sensing data packet to the terminal device in the cross-SP manner in the following specific implementation: The network device sends one third sensing data packet or fourth sensing data packet to the terminal device in each SP.

The third sensing data packet carries reuse indication information. The reuse indication information indicates each sensing period for reuse of the third sensing data packet. The fourth sensing data packet carries period indication information. The period indication information indicates a sensing period corresponding to the fourth sensing data packet. In other words, the third sensing data packet carries reuse indication information, to indicate that the third sensing data packet is reused by a plurality of sensing periods. The fourth sensing data packet carries period indication information, to indicate that the fourth sensing data packet is not reused by the plurality of sensing periods, and the fourth sensing data packet corresponds to only one sensing period. It should be noted that a meaning and a frame structure of the third sensing data packet are the same as those of the first sensing data packet, and a meaning and a frame structure of the fourth sensing data packet are different from those of the second sensing data packet only in a transmission direction. Refer to specific descriptions in the embodiment in FIG. 6a. Details are not described herein again.

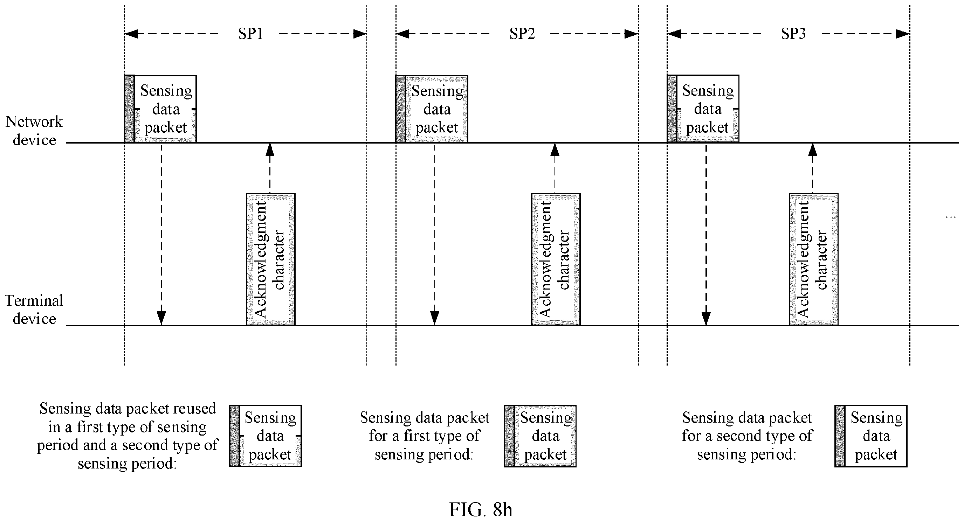

FIG. 8h is a schematic diagram of a scenario in which the network device, sends, to the terminal device, the sensing data packet obtained by reusing the sensing data packet in FIG. 8g. In FIG. 8h, the sensing data packet reused in the first type of sensing period and the second type of sensing period is the third sensing data packet, and the sensing data packet for the first type of sensing period and the sensing data packet for the second type of sensing period are fourth sensing data packets. It can be learned from FIG. 8h that, by reusing the sensing data packet, the sensing data packet sent in the SP1 and the SP3 may correspond to both the first type of sensing period and the second type of sensing period. In this manner, utilization of the sensing data packet is improved and overheads of transmitting the sensing data packet are reduced. In addition, when there are two types of sensing periods, it is better applied to a sensing measurement scenario in which sensing objects are at different speeds (or different distances). In the sensing measurement scenario in which the sensing objects are at different speeds (or different distances), this also helps improve sensing effect.

In an implementation, a payload carried in the sensing data packet may be service data or randomly generated data. Alternatively, the sensing data packet may carry no payload.

Step S803: The terminal device determines the sensing information based on the sensing data packet.

Specifically, after receiving the second indication information and the sensing data packet periodically sent by the network device, the terminal device may determine the sensing information based on the sensing data packet.

It should be noted that, in this embodiment of this application, a receive end of the sensing data packet may perform sensing on the entire sensing data packet. In this case, lengths of sensing data packets periodically sent by the network device may be the same. This can ensure periodicity of sensing measurement. The sensing data packet includes a preamble (preamble) and a payload (payload). In an implementation, the receive end of the sensing data packet may further perform sensing by using the preamble in the sensing data packet. In this case, lengths of sensing data packets periodically sent by the network device may be the same or may be different. The preamble has a fixed length. When sensing is performed by using the preamble, a length of the payload does not affect the periodicity of sensing measurement.

In an implementation, the data type may be a processed type. In this case, the second indication information specifically indicates the terminal device to feed back the processed sensing result of the sensing object. In other words, the sensing information fed back by the terminal device includes the sensing result.

In an implementation, the data type may be an unprocessed type. In this case, the second indication information specifically indicates the terminal device to feed back the unprocessed raw sensing data that is of the sensing object and that is obtained by sensing measurement. In other words, the sensing information fed back by the terminal device includes the raw sensing data. After receiving the raw sensing data, the network device may further perform data processing on the raw sensing data to obtain the sensing result of the sensing object. In an implementation, the sensing information may include CSI. The sensing data packet is periodically sent, so that the terminal device may periodically update the CSI, to implement periodic channel sounding.

Step S804: The terminal device sends the sensing information to the network device.

After determining the sensing information, the terminal device may send the sensing information to the network device.

In this embodiment of this application, the sensing data packet is periodically sent. This can increase a transmit frequency of air interface information, help obtain more sensing information related to the sensing object, and improve sensing performance.

In the foregoing embodiments provided in this application, the methods provided in the embodiments of this application are described separately from perspectives of the terminal device and the network device. To implement functions in the foregoing methods provided in the embodiments of this application, the network device and the terminal device may include a hardware structure, a software module, and implement the foregoing functions in a form of the hardware structure, the software module, or a combination of the hardware structure and the software module. A function in the foregoing functions may be performed in a form of the hardware structure, the software module, or a combination of the hardware structure and the software module.

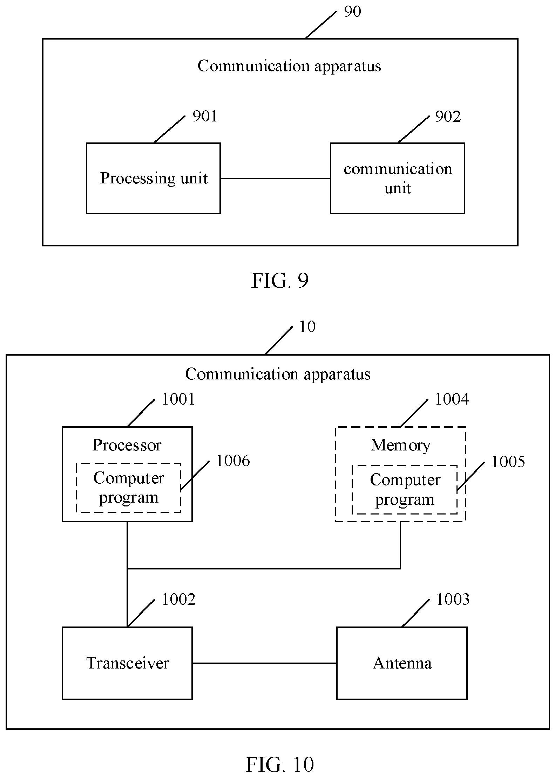

FIG. 9 is a schematic diagram of a structure of a communication apparatus 90 according to an embodiment of this application. As shown in FIG. 9, the communication apparatus 90 may include a processing unit 901 and a communication unit 902. The communication unit 902 may include a sending unit and/or a receiving unit. The sending unit is configured to implement a sending function, the receiving unit is configured to implement a receiving function, and the communication unit 902 may implement a sending function and/or a receiving function. The communication unit may also be described as a transceiver unit.

The communication apparatus 90 may be a terminal device, an apparatus in the terminal device, or an apparatus that can be used together with the terminal device. Alternatively, the communication apparatus 90 may be a network device, an apparatus in a network device, or an apparatus that can be used together with a network device.

The communication apparatus 90 is the terminal device in the embodiments in FIG. 2a to FIG. 6a. The processing unit 901 is configured to invoke the communication unit 902 to receive first indication information from a network device. The first indication information includes a sensing parameter, and indicates the communication apparatus 90 to periodically send a sensing data packet based on the sensing parameter. The processing unit 901 is further configured to invoke the communication unit 902 to periodically send the sensing data packet to the network device based on the sensing parameter. The sensing data packet is used to determine a sensing result of a sensing object. The sensing object is in coverage of the network device.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, the sensing parameter indicates that the sensing type is the TXOP type and the number of types of sensing periods is 1. The processing unit 901 is further configured to invoke the communication unit 902 to periodically send the sensing data packet to the network device in one TXOP.

In an implementation, the sensing parameter indicates that the sensing type is a cross-SP type and the number of types of sensing periods is 1. The processing unit 901 is further configured to invoke the communication unit 902 to send one sensing data packet to the network device at an interval of a first number of SPs, where the first number is one or more.

In an implementation, the sensing parameter further indicates the duration of the sensing period and the duration of each SP. A product of the first number and the duration of each SP is the duration of the sensing period.

In an implementation, the sensing parameter indicates that the sensing type is a cross-SP type and the number of types of sensing periods is N. For an i^{th} type of sensing period, the processing unit 901 is further configured to invoke the communication unit 902 to send a sensing data packet for the i^{th} type of sensing period to the network device at intervals of a same number of SPs, where both N and i are integers, and 1 ≤ i ≤ N.

In an implementation, the sensing parameter indicates that the sensing type is a cross-SP type and there are a plurality of types of sensing periods. Each type of sensing period includes one or more SPs. The processing unit 901 is further configured to invoke the communication unit 902 to send one first sensing data packet or second sensing data packet in each SP. The first sensing data packet carries reuse indication information, where the reuse indication information indicates each sensing period for reuse of the first sensing data packet. The second sensing data packet carries period indication information, where the period indication information indicates a sensing period corresponding to the second sensing data packet.

In an implementation, a payload carried in the sensing data packet may be service data or randomly generated data. Alternatively, the sensing data packet carries no payload.

The communication apparatus 90 is the terminal device in the embodiment in FIG. 8a. The processing unit 901 is configured to invoke the communication unit 902 to receive second indication information from a network device. The second indication information indicates the communication apparatus 90 to feed back sensing information based on a sensing data packet. The sensing information is used to determine a sensing result of a sensing object. The sensing object is in coverage of the network device. The processing unit 901 is further configured to invoke the communication unit 902 to receive the sensing data packet from the network device. The sensing data packet is periodically sent by the network device. The processing unit 901 is further configured to determine the sensing information based on the sensing data packet. The processing unit 901 is further configured to invoke the communication unit 902 to send the sensing information to the network device.

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object.

In an implementation, a payload carried in the sensing data packet is service data or randomly generated data. Alternatively, the sensing data packet carries no payload.

The communication apparatus 90 is the network device in the embodiments in FIG. 2a to FIG. 6a. The processing unit 901 is configured to invoke the communication unit 902 to send first indication information to a terminal device. The first indication information includes a sensing parameter, and indicates the terminal device to periodically send a sensing data packet based on the sensing parameter. The processing unit 901 is further configured to invoke the communication unit 902 to receive the sensing data packet from the terminal device. The processing unit 901 is further configured to determine a sensing result of a sensing object based on the sensing data packet. The sensing object is in coverage of the communication apparatus 90.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, a payload carried in the sensing data packet may be service data or randomly generated data. Alternatively, the sensing data packet carries no payload.

The communication apparatus 90 is the network device in the embodiment in FIG. 8a. The processing unit 901 is configured to invoke the communication unit 902 to send second indication information to a terminal device. The second indication information indicates the terminal device to feed back sensing information based on a sensing data packet. The sensing information is used to determine a sensing result of a sensing object. The sensing object is in coverage of the communication apparatus 90. The processing unit 901 is further configured to invoke the communication unit 902 to periodically send the sensing data packet to the terminal device. The processing unit 901 is further configured to invoke the communication unit 902 to receive the sensing information from the terminal device.

In an implementation, the processing unit 901 is further configured to invoke the communication unit 902 to periodically send the sensing data packet to the terminal device in one TXOP.

In an implementation, the number of types of sensing periods is 1. The processing unit 901 is further configured to invoke the communication unit 902 to send one sensing data packet to the terminal device at an interval of a second number of SPs.

In an implementation, the number of types of sensing periods is M. For a j^{th} type of sensing period, the processing unit 901 is further configured to invoke the communication unit 902 to send a sensing data packet for the j^{th} type of sensing period to the terminal device at intervals of a same number of SPs, where both M and j are integers, and 1 ≤ j ≤ M.

In an implementation, there are a plurality of types of sensing periods. Each type of sensing period includes one or more SPs. The processing unit 901 is further configured to invoke the communication unit 902 to send one third sensing data packet or fourth sensing data packet to the terminal device in each SP. The third sensing data packet carries reuse indication information, where the reuse indication information indicates each sensing period for reuse of the third sensing data packet. The fourth sensing data packet carries period indication information, where the period indication information indicates a sensing period corresponding to the fourth sensing data packet.

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object. The processing unit 901 is further configured to perform data processing on the raw sensing data to obtain the sensing result.

In an implementation, a payload carried in the sensing data packet is service data or randomly generated data. Alternatively, the sensing data packet carries no payload.

FIG. 10 is a schematic diagram of a structure of another communication apparatus 100 according to an embodiment of this application. The communication apparatus 100 may be a network device; may be a terminal device; may be a chip, a chip system, a processor, or the like that supports the network device in implementing the foregoing method; or may be a chip, a chip system, a processor, or the like that supports the terminal device in implementing the foregoing method. The apparatus may be configured to implement the methods described in the foregoing method embodiments. For details, refer to the descriptions in the foregoing method embodiments.

The communication apparatus 100 may include one or more processors 1001. The processor 1001 may be a general-purpose processor, a dedicated processor, or the like. For example, the processor 1001 may be a baseband processor or a central processing unit. The baseband processor may be configured to process a communication protocol and communication data, and the central processing unit may be configured to control a communication apparatus (for example, a base station, a baseband chip, a terminal, a terminal chip, a DU, or a CU) to execute a computer program, to process data of the computer program.

The communication apparatus 100 may further include a transceiver 1002 and an antenna 1003. The transceiver 1002 may be referred to as a transceiver unit, a transceiver, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

Optionally, the communication apparatus 100 may include one or more memories 1004, and the memory 1004 may store a computer program 1005. The computer program may be run on the communication apparatus 100, so that the communication apparatus 100 performs the methods described in the foregoing method embodiments. Optionally, the memory 1004 may further store data. The communication apparatus 100 and the memory 1004 may be separately disposed, or may be integrated.

The communication apparatus 100 is the terminal device in the embodiments in FIG. 2a to FIG. 6a. The transceiver 1002 is configured to perform step S202 in FIG. 2a, or step S302 in FIG. 3a, or step S402 in FIG. 4a, or step S502 in FIG. 5a, or step S602 in FIG. 6a.

The communication apparatus 100 is the terminal device in the embodiment in FIG. 8a. The processor 1001 is configured to perform step S803 in FIG. 8a. The transceiver 1002 is configured to perform step S804 in FIG. 8a.

The communication apparatus 100 is the network device in the embodiments in FIG. 2a to FIG. 6a. The processor 1001 is configured to perform step S203 in FIG. 2a, or step S303 in FIG. 3a, or step S403 in FIG. 4a, or step S503 in FIG. 5a, or step S603 in FIG. 6a. The transceiver 1002 is configured to perform step S201 in FIG. 2a, or step S301 in FIG. 3a, or step S401 in FIG. 4a, or step S501 in FIG. 5a, or step S601 in FIG. 6a.

The communication apparatus 100 is the network device in the embodiment in FIG. 8a. The transceiver 1002 is configured to perform step S801 to step S802 in FIG. 8a.

In an implementation, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In an implementation, the processor 1001 may store a computer program 1006. The computer program 1006 is run on the processor 1001, to enable the communication apparatus 100 to perform the methods described in the foregoing method embodiments. The computer program 1006 may be permanently configured in the processor 1001, and in this case, the processor 1001 may be implemented by hardware.

In an implementation, the communication apparatus 100 may include a circuit, and the circuit may implement a sending, receiving, or communication function in the foregoing method embodiments. The processor and the transceiver described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus in the foregoing embodiment may be a network device or a terminal device. However, a scope of the communication apparatus described in this application is not limited thereto, and a structure of the communication apparatus may not be limited by FIG. 10. The communication apparatus may be an independent device or may be a part of a larger device. For example, the communication apparatus may be:
(1) an independent integrated circuit IC, a chip, or a chip system or subsystem;
(2) a set including one or more ICs, where optionally, the IC set may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

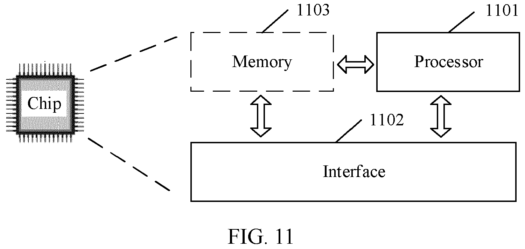

For a case in which the communication apparatus may be a chip or a chip system, refer to a schematic diagram of a structure of a chip shown in FIG. 11. The chip shown in FIG. 11 includes a processor 1101 and an interface 1102. There may be one or more processors 1101, and there may be a plurality of interfaces 1102.

A case in which the chip is configured to implement the function of the terminal device in the embodiments in FIG. 2a to FIG. 6a is described below.

The processor 1101 is configured to invoke the interface 1102 to receive first indication information from a network device. The first indication information includes a sensing parameter, and indicates the terminal device to periodically send a sensing data packet based on the sensing parameter. The processor 1101 is further configured to invoke the interface 1102 to periodically send the sensing data packet to the network device based on the sensing parameter. The sensing data packet is used to determine a sensing result of a sensing object. The sensing object is in coverage of the network device.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, the sensing parameter indicates that the sensing type is the TXOP type and the number of types of sensing periods is 1. The processor 1101 is further configured to invoke the interface 1102 to periodically send the sensing data packet to the network device in one TXOP.

In an implementation, the sensing parameter indicates that the sensing type is a cross-SP type and the number of types of sensing periods is 1. The processor 1101 is further configured to invoke the interface 1102 to send one sensing data packet to the network device at an interval of a first number of SPs, where the first number is one or more.

In an implementation, the sensing parameter further indicates the duration of the sensing period and the duration of each SP. A product of the first number and the duration of each SP is the duration of the sensing period.

In an implementation, the sensing parameter indicates that the sensing type is a cross-SP type and the number of types of sensing periods is N. For an i^{th} type of sensing period, the processor 1101 is further configured to invoke the interface 1102 to send a sensing data packet for the i^{th} type of sensing period to the network device at intervals of a same number of SPs, where both N and i are integers, and 1 ≤ i ≤ N.

In an implementation, the sensing parameter indicates that the sensing type is a cross-SP type and there are a plurality of types of sensing periods. Each type of sensing period includes one or more SPs. The processor 1101 is further configured to invoke the interface 1102 to send one first sensing data packet or second sensing data packet in each SP. The first sensing data packet carries reuse indication information, where the reuse indication information indicates each sensing period for reuse of the first sensing data packet. The second sensing data packet carries period indication information, where the period indication information indicates a sensing period corresponding to the second sensing data packet.

In an implementation, a payload carried in the sensing data packet may be service data or randomly generated data. Alternatively, the sensing data packet carries no payload.

A case in which the chip is configured to implement the function of the terminal device in the embodiment in FIG. 8a is described below.

The processor 1101 is configured to invoke the interface 1102 to receive second indication information from a network device. The second indication information indicates the terminal device to feed back sensing information based on a sensing data packet. The sensing information is used to determine a sensing result of a sensing object. The sensing object is in coverage of the network device. The processor 1101 is further configured to invoke the interface 1102 to receive the sensing data packet from the network device. The sensing data packet is periodically sent by the network device. The processor 1101 is further configured to determine the sensing information based on the sensing data packet. The processor 1101 is further configured to invoke the interface 1102 to send the sensing information to the network device.

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object.

In an implementation, a payload carried in the sensing data packet is service data or randomly generated data. Alternatively, the sensing data packet carries no payload.

A case in which the chip is configured to implement the function of the network device in the embodiments in FIG. 2a to FIG. 6a is described below.

The processor 1101 is configured to invoke the interface 1102 to send first indication information to a terminal device. The first indication information includes a sensing parameter, and indicates the terminal device to periodically send a sensing data packet based on the sensing parameter. The processor 1101 is further configured to invoke the interface 1102 to receive the sensing data packet from the terminal device. The processor 1101 is further configured to determine a sensing result of a sensing object based on the sensing data packet. The sensing object is in coverage of the network device.

In an implementation, the sensing parameter indicates one or more of the following: a sensing type, where the sensing type is a transmission opportunity TXOP type or a cross-service period SP type; a number of types of sensing periods; duration of each type of sensing period; duration of each SP; a number of SPs included in each type of sensing period; for each type of sensing period, a number of sensing data packets to be sent at an interval of duration of the sensing period; and for each type of sensing period, a length of the sensing data packet to be sent at an interval of duration of the sensing period.

In an implementation, a payload carried in the sensing data packet may be service data or randomly generated data. Alternatively, the sensing data packet carries no payload.

A case in which the chip is configured to implement the function of the network device in the embodiment FIG. 8a is described below.

The processor 1101 is configured to invoke the interface 1102 to send second indication information to a terminal device. The second indication information indicates the terminal device to feed back sensing information based on a sensing data packet. The sensing information is used to determine a sensing result of a sensing object. The sensing object is in coverage of the network device. The processor 1101 is further configured to invoke the interface 1102 to periodically send the sensing data packet to the terminal device. The processor 1101 is further configured to invoke the interface 1102 to receive the sensing information from the terminal device.

In an implementation, the processor 1101 is further configured to invoke the interface 1102 to periodically send the sensing data packet to the terminal device in one TXOP.

In an implementation, the number of types of sensing periods is 1. The processor 1101 is further configured to invoke the interface 1102 to send one sensing data packet to the terminal device at an interval of a second number of SPs.

In an implementation, the number of types of sensing periods is M. For a j^{th} type of sensing period, the processor 1101 is further configured to invoke the interface 1102 to send a sensing data packet for the j^{th} type of sensing period to the terminal device at intervals of a same number of SPs, where both M and j are integers, and 1 ≤ j ≤ M.

In an implementation, there are a plurality of types of sensing periods. Each type of sensing period includes one or more SPs. The processor 1101 is further configured to invoke the interface 1102 to send one third sensing data packet or fourth sensing data packet to the terminal device in each SP. The third sensing data packet carries reuse indication information, where the reuse indication information indicates each sensing period for reuse of the third sensing data packet. The fourth sensing data packet carries period indication information, where the period indication information indicates a sensing period corresponding to the fourth sensing data packet.

In an implementation, the second indication information includes a data type, and the sensing information matches the data type.

In an implementation, the data type is a processed type, and the sensing information includes the sensing result.

In an implementation, the data type is an unprocessed type, and the sensing information includes raw sensing data of the sensing object. The processor 1101 is further configured to perform data processing on the raw sensing data to obtain the sensing result.

In an implementation, a payload carried in the sensing data packet is service data or randomly generated data. Alternatively, the sensing data packet carries no payload.

Optionally, the chip further includes a memory 1103, and the memory 1103 is configured to store a necessary computer program and data.

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the described functions for each particular application, but it should not be considered that the implementation goes beyond the scope of embodiments of this application.

This application further provides a computer-readable storage medium. The computer-readable storage medium stores a computer program. The computer program product includes program instructions. When the program instructions are executed by a computer, a function of any one of the foregoing method embodiments is implemented.

The computer-readable storage medium includes but is not limited to a flash memory, a hard disk, and a solid-state drive.

This application further provides a computer program product, and when the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on a computer, the procedures or functions according to embodiments of this application are all or partially generated. The computer may be a general-purpose computer, a dedicated computer, a computer network, or another programmable apparatus. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid state disk, SSD)), or the like.

A person of ordinary skill in the art may understand that various numerals such as "first" and "second" in this application are only used for differentiation for ease of description, and are not used to limit the scope of embodiments of this application or indicate a sequence.

"The at least one" in this application may alternatively be described as one or more, and "the multiple" means two, three, four, or more. This is not limited in this application. In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

The correspondences shown in the tables in this application may be configured, or may be predefined. Values of the information in the tables are only examples, and other values may be configured. This is not limited in this application. When a correspondence between the information and each parameter is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by a communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "prenegotiate", "pre-configure", "solidify", or "pre-burn".

A person skilled in the art may be aware that units and algorithm steps in the examples described with reference to the embodiments disclosed in this specification can be implemented by electronic hardware or an interaction of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, wherein the method comprises:
receiving, by a terminal device, first indication information from a network device, wherein the first indication information comprises a sensing parameter, and the first indication information indicates the terminal device to periodically send a sensing data packet based on the sensing parameter; and
periodically sending, by the terminal device, the sensing data packet to the network device based on the sensing parameter, wherein the sensing data packet is used to determine a sensing result of a sensing object, and the sensing object is in coverage of the network device.

2. The method according to claim 1, wherein the sensing parameter indicates one or more of the following:
a sensing type, wherein the sensing type is a transmission opportunity TXOP type or a cross-service period SP type;
a number of types of sensing periods;
duration of each type of sensing period;
duration of each SP;
a number of SPs comprised in each type of sensing period;
for each type of sensing period, a number of sensing data packets to be sent at an interval of duration of the sensing period; and
for each type of sensing period, a length of the sensing data packet to be sent at an interval of duration of the sensing period.

3. The method according to claim 2, wherein the sensing parameter indicates that the sensing type is the TXOP type and the number of types of sensing periods is 1; and
the periodically sending, by the terminal device, the sensing data packet to the network device based on the sensing parameter comprises:
periodically sending, by the terminal device, the sensing data packet to the network device in one TXOP.

4. The method according to claim 2, wherein the sensing parameter indicates that the sensing type is the cross-SP type and the number of types of sensing periods is 1; and
the periodically sending, by the terminal device, the sensing data packet to the network device based on the sensing parameter comprises:
sending, by the terminal device, one sensing data packet to the network device at an interval of a first number of SPs, wherein the first number is one or more.

5. The method according to claim 4, wherein the sensing parameter further indicates the duration of the sensing period and the duration of each SP; and a product of the first number and the duration of each SP is the duration of the sensing period.

6. The method according to claim 2, wherein the sensing parameter indicates that the sensing type is the cross-SP type and the number of types of sensing periods is N; and
the periodically sending, by the terminal device, the sensing data packet to the network device based on the sensing parameter comprises:
for an i^{th} type of sensing period, sending, by the terminal device, the sensing data packet for the i^{th} type of sensing period to the network device at intervals of a same number of SPs, wherein both N and i are integers, and 1 ≤ i ≤ N.

7. The method according to claim 2, wherein the sensing parameter indicates that the sensing type is the cross-SP type and there are a plurality of types of sensing periods; each type of sensing period comprises one or more SPs; and
the periodically sending, by the terminal device, the sensing data packet to the network device based on the sensing parameter comprises:
sending, by the terminal device, one first sensing data packet or second sensing data packet in each SP, wherein
the first sensing data packet carries reuse indication information, wherein the reuse indication information indicates each sensing period for reuse of the first sensing data packet; and the second sensing data packet carries period indication information, wherein the period indication information indicates a sensing period corresponding to the second sensing data packet.

8. The method according to any one of claims 1 to 7, wherein a payload carried in the sensing data packet is service data or randomly generated data; or the sensing data packet carries no payload.

9. A sensing method, wherein the method comprises:
sending, by a network device, first indication information to a terminal device, wherein the first indication information comprises a sensing parameter, and the first indication information indicates the terminal device to periodically send a sensing data packet based on the sensing parameter;
receiving, by the network device, the sensing data packet from the terminal device; and
determining, by the network device, a sensing result of a sensing object based on the sensing data packet, wherein the sensing object is in coverage of the network device.

10. The method according to claim 9, wherein the sensing parameter indicates one or more of the following:
a sensing type, wherein the sensing type is a transmission opportunity TXOP type or a cross-service period SP type;
a number of types of sensing periods;
duration of each type of sensing period;
duration of each SP;
a number of SPs comprised in each type of sensing period;
for each type of sensing period, a number of sensing data packets to be sent at an interval of duration of the sensing period; and
for each type of sensing period, a length of the sensing data packet to be sent at an interval of duration of the sensing period.

11. The method according to claim 9 or 10, wherein a payload carried in the sensing data packet is service data or randomly generated data; or the sensing data packet carries no payload.

12. A sensing method, wherein the method comprises:
sending, by a network device, second indication information to a terminal device, wherein the second indication information indicates the terminal device to feed back sensing information based on a sensing data packet, the sensing information is used to determine a sensing result of a sensing object, and the sensing object is in coverage of the network device;
periodically sending, by the network device, the sensing data packet to the terminal device; and
receiving, by the network device, the sensing information from the terminal device.

13. The method according to claim 12, wherein the periodically sending, by the network device, the sensing data packet to the terminal device comprises:
periodically sending, by the network device, the sensing data packet to the terminal device in one TXOP.

14. The method according to claim 12, wherein a number of types of sensing periods is 1; and the periodically sending, by the network device, the sensing data packet to the terminal device comprises:
sending, by the network device, one sensing data packet to the terminal device at an interval of a second number of SPs.

15. The method according to claim 12, wherein a number of types of sensing periods is M; and the periodically sending, by the network device, the sensing data packet to the terminal device comprises:
for a j^{th} type of sensing period, sending, by the network device, the sensing data packet for the j^{th} type of sensing period to the terminal device at intervals of a same number of SPs, wherein both M and j are integers, and 1 ≤ j ≤ M.

16. The method according to claim 12, wherein there are a plurality of types of sensing periods; each type of sensing period comprises one or more SPs; and the periodically sending, by the network device, the sensing data packet to the terminal device comprises:
sending, by the network device, one third sensing data packet or fourth sensing data packet to the terminal device in each SP, wherein
the third sensing data packet carries reuse indication information, wherein the reuse indication information indicates each sensing period for reuse of the third sensing data packet; and the fourth sensing data packet carries period indication information, wherein the period indication information indicates a sensing period corresponding to the fourth sensing data packet.

17. The method according to any one of claims 12 to 16, wherein the second indication information comprises a data type, and the sensing information matches the data type.

18. The method according to claim 17, wherein the data type is a processed type, and the sensing information comprises the sensing result.

19. The method according to claim 17, wherein the data type is an unprocessed type, and the sensing information comprises raw sensing data of the sensing object; and the method further comprises:
performing, by the network device, data processing on the raw sensing data to obtain the sensing result.

20. The method according to any one of claims 12 to 19, wherein a payload carried in the sensing data packet is service data or randomly generated data; or the sensing data packet carries no payload.

21. A sensing method, wherein the method comprises:
receiving, by a terminal device, second indication information from a network device, wherein the second indication information indicates the terminal device to feed back sensing information based on a sensing data packet, the sensing information is used to determine a sensing result of a sensing object, and the sensing object is in coverage of the network device;
receiving, by the terminal device, the sensing data packet from the network device, wherein the sensing data packet is periodically sent by the network device;
determining, by the terminal device, the sensing information based on the sensing data packet; and
sending, by the terminal device, the sensing information to the network device.

22. The method according to claim 21, wherein the second indication information comprises a data type, and the sensing information matches the data type.

23. The method according to claim 22, wherein the data type is a processed type, and the sensing information comprises the sensing result.

24. The method according to claim 22, wherein the data type is an unprocessed type, and the sensing information comprises raw sensing data of the sensing object.

25. The method according to any one of claims 21 to 24, wherein a payload carried in the sensing data packet is service data or randomly generated data; or the sensing data packet carries no payload.

26. A communication apparatus, comprising a unit configured to perform the method according to any one of claims 1 to 8 or 21 to 25.

27. A communication apparatus, comprising a unit configured to perform the method according to any one of claims 9 to 11 or 12 to 20.

28. A communication apparatus, wherein the apparatus comprises a processor and a memory, the memory stores program instructions, and the processor executes the program instructions stored in the memory, to enable the apparatus to perform the method according to any one of claims 1 to 8 or 21 to 25.

29. A communication apparatus, wherein the apparatus comprises a processor and a memory, the memory stores program instructions, and the processor executes the program instructions stored in the memory, to enable the apparatus to perform the method according to any one of claims 9 to 11 or 12 to 20.

30. A computer-readable storage medium, wherein the computer-readable storage medium stores a computer program, the computer program comprises program instructions, and when the program instructions are executed by a communication apparatus, the communication apparatus is enabled to perform the method according to any one of claims 1 to 8, 9 to 11, 12 to 20, or 21 to 25.
